# EUROPEAN PATENT APPLICATION

(11) **EP 4 422 284 A1**
(43) Date of publication of application: **28.08.2024**
(21) Application number: 22890246.6
(22) Date of filing: 24.10.2022
(51) Int. Cl.: H04W 52/02, H04W 76/28, H04W 8/24, H04W 72/04

(54) **METHOD FOR TRANSMITTING AND RECEIVING DOWNLINK CONTROL CHANNEL, AND DEVICE THEREFOR**

(30) Priority: 05.11.2021 KR 20210151351; 21.04.2022 KR 20220049472
(71) Applicant: LG Electronics Inc., Yeongdeungpo-gu Seoul 07336 (KR)
(72) Inventor: LEE, Sunghoon, Seoul 06772 (KR); HWANG, Seunggye, Seoul 06772 (KR); YANG, Suckchel, Seoul 06772 (KR); KIM, Seonwook, Seoul 06772 (KR)
(74) Representative: Plasseraud IP
(86) International application number: PCT/KR2022/016224
(87) International publication number: WO 2023/080511

(57) **Abstract**

The present disclosure discloses a method by which a terminal receives a physical downlink control channel (PDCCH) in a wireless communication system. In particular, the method may comprise: receiving, through an upper layer, first information related to search space set group (SSSG) switching and second information related to PDCCH monitoring skipping; receiving downlink control information (DCI) indicating a PDCCH monitoring skipping operation through a search space set; determining a duration of the PDCCH monitoring skipping operation on the basis of the DCI and an SSSG corresponding to the search space set; and receiving the PDCCH after an end of the duration.

## Description

### Technical Field

The disclosure relates to a method and apparatus for transmitting and receiving a downlink control channel, and more particularly, to a method and apparatus for indicating a physical downlink control channel (PDCCH) monitoring skipping operation in association with downlink control information (DCI), a search space set group (SSSG) in which the DCI is detected, and/or a discontinuous reception (DTX) timer.

### Background Art

As more and more communication devices demand larger communication traffic along with the current trends, a future-generation 5th generation (5G) system is required to provide an enhanced wireless broadband communication, compared to the legacy LTE system. In the future-generation 5G system, communication scenarios are divided into enhanced mobile broadband (eMBB), ultra-reliability and low-latency communication (URLLC), massive machine-type communication (mMTC), and so on.

Herein, eMBB is a future-generation mobile communication scenario characterized by high spectral efficiency, high user experienced data rate, and high peak data rate, URLLC is a future-generation mobile communication scenario characterized by ultra-high reliability, ultra-low latency, and ultra-high availability (e.g., vehicle to everything (V2X), emergency service, and remote control), and mMTC is a future-generation mobile communication scenario characterized by low cost, low energy, short packet, and massive connectivity (e.g., Internet of things (IoT)).

### Disclosure

### Technical Problem

The disclosure is intended to provide a method and apparatus for transmitting and receiving a downlink control channel.

Additional advantages, objects, and features of the disclosure will be set forth in part in the description which follows and in part will become apparent to those having ordinary skill in the art upon examination of the following or may be learned from practice of the disclosure. The objectives and other advantages of the disclosure may be realized and attained by the structure particularly pointed out in the written description and claims hereof as well as the appended drawings.

### Technical Solution

A method of receiving a physical downlink control channel (PDCCH) by a user equipment (UE) in a wireless communication system according to an embodiment of the disclosure includes receiving first information related to search space set group (SSSG) switching and second information related to PDCCH monitoring skipping through a higher layer, receiving downlink control information (DCI) indicating a PDCCH monitoring skipping operation through a search space set, determining a duration of the PDCCH monitoring skipping operation based on the DCI and an SSSG corresponding to the search space set, and receiving the PDCCH after an end of the duration.

The DCI may further indicate an SSSG to monitor after an end of the duration.

Further, the duration may be aligned with a timer for the SSSG switching.

Further, the first information and the second information may be configured for each bandwidth part (BWP).

Further, when a first end time of the duration is after a second end time of a discontinuous reception (DRX) active time, a DRX cycle corresponding to the DRX active time may end before the second end time.

Further, a PDCCH monitoring adaptation operation corresponding to a bit value of a PDCCH monitoring adaptation field included in the DCI may be determined based on a format of the DCI.

A UE for receiving a PDCCH in a wireless communication system according to an embodiment of the disclosure includes at least one transceiver, at least one processor, and at least one memory operably connected to the at least one processor and storing instructions which when executed, cause the at least one processor to perform operations. The operations include receiving, through the at least one transceiver, first information related to SSSG switching and second information related to PDCCH monitoring skipping through a higher layer, receiving, through the at least one transceiver, DCI indicating a PDCCH monitoring skipping operation through a search space set, determining a duration of the PDCCH monitoring skipping operation based on the DCI and an SSSG corresponding to the search space set, and receiving the PDCCH through the at least one transceiver, after an end of the duration.

The DCI may further indicate an SSSG to monitor after an end of the duration.

Further, the duration may be aligned with a timer for the SSSG switching.

Further, the first information and the second information may be configured for each bandwidth part (BWP).

Further, when a first end time of the duration is after a second end time of a discontinuous reception (DRX) active time, a DRX cycle corresponding to the DRX active time may end before the second end time.

Further, a PDCCH monitoring adaptation operation corresponding to a bit value of a PDCCH monitoring adaptation field included in the DCI may be determined based on a format of the DCI.

An apparatus for receiving a PDCCH in a wireless communication system according to an embodiment of the disclosure includes at least one processor, and at least one memory operably connected to the at least one processor and storing instructions which when executed, cause the at least one processor to perform operations. The operations include receiving first information related to SSSG switching and second information related to PDCCH monitoring skipping through a higher layer, receiving DCI indicating a PDCCH monitoring skipping operation through a search space set, determining a duration of the PDCCH monitoring skipping operation based on the DCI and an SSSG corresponding to the search space set, and receiving the PDCCH after an end of the duration.

A computer-readable storage medium according to an embodiment of the disclosure includes at least one computer program causing at least one processor to perform operations. The operations include receiving first information related to SSSG switching and second information related to PDCCH monitoring skipping through a higher layer, receiving DCI indicating a PDCCH monitoring skipping operation through a search space set, determining a duration of the PDCCH monitoring skipping operation based on the DCI and an SSSG corresponding to the search space set, and receiving the PDCCH after an end of the duration.

A method of transmitting a PDCCH by a base station (BS) in a wireless communication system according to an embodiment of the disclosure includes transmitting first information related to SSSG switching and second information related to PDCCH monitoring skipping through a higher layer, transmitting DCI indicating a PDCCH monitoring skipping operation through a search space set, and transmitting the PDCCH after a duration of the PDCCH monitoring skipping operation determined based on the DCI and an SSSG corresponding to the search space set ends.

A BS for transmitting a PDCCH in a wireless communication system according to an embodiment of the disclosure includes at least one transceiver, at least one processor, and at least one memory operably connected to the at least one processor and storing instructions which when executed, cause the at least one processor to perform operations. The operations include transmitting first information related to SSSG switching and second information related to PDCCH monitoring skipping through a higher layer, transmitting DCI indicating a PDCCH monitoring skipping operation through a search space set, and transmitting the PDCCH after a duration of the PDCCH monitoring skipping operation determined based on the DCI and an SSSG corresponding to the search space set ends.

### Advantageous Effects

According to the disclosure, the effect of power saving of a user equipment (UE) may be maximized by configuring a PDCCH monitoring skipping duration for the UE. In the proposal of the disclosure, PDCCH monitoring skipping duration configurations for various environments that may be considered in the future as well as for a Rel-17 NR UE environment are considered. Accordingly, a base station (BS)/UE may indicate/perform PDCCH monitoring skipping for the purpose of power saving.

Methods of setting/indicating/configuring a PDCCH monitoring skipping duration proposed in the disclosure may be performed independently or in conjunction with each other. Accordingly, the UE may be indicated to perform PDCCH monitoring skipping without constraints within a DRX active time, thereby performing an existing NR standard operation without problems while reducing unnecessary power consumption.

Additional advantages, objects, and features of the disclosure will be set forth in part in the description which follows and in part will become apparent to those having ordinary skill in the art upon examination of the following or may be learned from practice of the disclosure.

### Brief Description of the Drawings

FIGS. 1 and 2 are diagrams for explaining idle mode discontinuous reception (DRX) operation.
FIGS. 3 to 5 are diagrams for explaining DRX operation in a radio resource control (RRC) connected mode.
FIG. 6 is a diagram for explaining a method of monitoring DCI format 2_6.
FIGS. 7 to 9 are diagrams illustrating an overall operation process of a UE and a BS according to an embodiment of the disclosure.
FIGS. 10 and 11 are diagrams illustrating a method of configuring and/or applying a PDCCH monitoring skipping duration according to proposed methods of the disclosure.
FIG. 12 illustrates an exemplary communication system applied to the disclosure.
FIG. 13 illustrates an exemplary wireless device applicable to the disclosure.
FIG. 14 illustrates an exemplary vehicle or autonomous driving vehicle applicable to the disclosure.
FIG. 15 illustrates an extended reality (XR) device applicable to the disclosure.

### Best Mode

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

While the following description is given in the context of a 3GPP communication system (e.g., NR) for clarity, the technical spirit of the disclosure is not limited to the 3GPP communication system. For the background art, terms, and abbreviations used in the disclosure, refer to the technical specifications published before the disclosure (e.g., 38.211, 38.212, 38.213, 38.214, 38.300, 38.331, and so on).

5G communication involving a new radio access technology (NR) system will be described below.

Three key requirement areas of 5G are (1) enhanced mobile broadband (eMBB), (2) massive machine type communication (mMTC), and (3) ultra-reliable and low latency communications (URLLC).

Some use cases may require multiple dimensions for optimization, while others may focus only on one key performance indicator (KPI). 5G supports such diverse use cases in a flexible and reliable way.

eMBB goes far beyond basic mobile Internet access and covers rich interactive work, media and entertainment applications in the cloud or augmented reality (AR). Data is one of the key drivers for 5G and in the 5G era, we may for the first time see no dedicated voice service. In 5G, voice is expected to be handled as an application program, simply using data connectivity provided by a communication system. The main drivers for an increased traffic volume are the increase in the size of content and the number of applications requiring high data rates. Streaming services (audio and video), interactive video, and mobile Internet connectivity will continue to be used more broadly as more devices connect to the Internet. Many of these applications require always-on connectivity to push real time information and notifications to users. Cloud storage and applications are rapidly increasing for mobile communication platforms. This is applicable for both work and entertainment. Cloud storage is one particular use case driving the growth of uplink data rates. 5G will also be used for remote work in the cloud which, when done with tactile interfaces, requires much lower endto-end latencies in order to maintain a good user experience. Entertainment, for example, cloud gaming and video streaming, is another key driver for the increasing need for mobile broadband capacity. Entertainment will be very essential on smart phones and tablets everywhere, including high mobility environments such as trains, cars, and airplanes. Another use case is AR for entertainment and information search, which requires very low latencies and significant instant data volumes.

One of the most expected 5G use cases is the functionality of actively connecting embedded sensors in every field, that is, mMTC. It is expected that there will be 20.4 billion potential Internet of things (IoT) devices by 2020. In industrial IoT, 5G is one of areas that play key roles in enabling smart city, asset tracking, smart utility, agriculture, and security infrastructure.

URLLC includes services which will transform industries with ultra-reliable/available, low latency links such as remote control of critical infrastructure and self-driving vehicles. The level of reliability and latency are vital to smart-grid control, industrial automation, robotics, drone control and coordination, and so on.

Now, multiple use cases in a 5G communication system including the NR system will be described in detail.

5G may complement fiber-to-the home (FTTH) and cable-based broadband (or data-over-cable service interface specifications (DOCSIS)) as a means of providing streams at data rates of hundreds of megabits per second to giga bits per second. Such a high speed is required for TV broadcasts at or above a resolution of 4K (6K, 8K, and higher) as well as virtual reality (VR) and AR. VR and AR applications mostly include immersive sport games. A special network configuration may be required for a specific application program. For VR games, for example, game companies may have to integrate a core server with an edge network server of a network operator in order to minimize latency.

The automotive sector is expected to be a very important new driver for 5G, with many use cases for mobile communications for vehicles. For example, entertainment for passengers requires simultaneous high capacity and high mobility mobile broadband, because future users will expect to continue their good quality connection independent of their location and speed. Other use cases for the automotive sector are AR dashboards. These display overlay information on top of what a driver is seeing through the front window, identifying objects in the dark and telling the driver about the distances and movements of the objects. In the future, wireless modules will enable communication between vehicles themselves, information exchange between vehicles and supporting infrastructure and between vehicles and other connected devices (e.g., those carried by pedestrians). Safety systems may guide drivers on alternative courses of action to allow them to drive more safely and lower the risks of accidents. The next stage will be remote-controlled or self-driving vehicles. These require very reliable, very fast communication between different self-driving vehicles and between vehicles and infrastructure. In the future, self-driving vehicles will execute all driving activities, while drivers are focusing on traffic abnormality elusive to the vehicles themselves. The technical requirements for self-driving vehicles call for ultra-low latencies and ultra-high reliability, increasing traffic safety to levels humans cannot achieve.

Smart cities and smart homes, often referred to as smart society, will be embedded with dense wireless sensor networks. Distributed networks of intelligent sensors will identify conditions for cost- and energy-efficient maintenance of the city or home. A similar setup may be done for each home, where temperature sensors, window and heating controllers, burglar alarms, and home appliances are all connected wirelessly. Many of these sensors are typically characterized by low data rate, low power, and low cost, but for example, real time high definition (HD) video may be required in some types of devices for surveillance.

The consumption and distribution of energy, including heat or gas, is becoming highly decentralized, creating the need for automated control of a very distributed sensor network. A smart grid interconnects such sensors, using digital information and communications technology to gather and act on information. This information may include information about the behaviors of suppliers and consumers, allowing the smart grid to improve the efficiency, reliability, economics and sustainability of the production and distribution of fuels such as electricity in an automated fashion. A smart grid may be seen as another sensor network with low delays.

The health sector has many applications that may benefit from mobile communications. Communications systems enable telemedicine, which provides clinical health care at a distance. It helps eliminate distance barriers and may improve access to medical services that would often not be consistently available in distant rural communities. It is also used to save lives in critical care and emergency situations. Wireless sensor networks based on mobile communication may provide remote monitoring and sensors for parameters such as heart rate and blood pressure.

Wireless and mobile communications are becoming increasingly important for industrial applications. Wires are expensive to install and maintain, and the possibility of replacing cables with reconfigurable wireless links is a tempting opportunity for many industries. However, achieving this requires that the wireless connection works with a similar delay, reliability, and capacity as cables and that its management is simplified. Low delays and very low error probabilities are new requirements that need to be addressed with 5G.

Finally, logistics and freight tracking are important use cases for mobile communications that enable the tracking of inventory and packages wherever they are by using location-based information systems. The logistics and freight tracking use cases typically require lower data rates but need wide coverage and reliable location information.

### DRX (Discontinuous Reception) operation

The UE uses Discontinuous Reception (DRX) in RRC_IDLE and RRC_INACTIVE state in order to reduce power consumption. When the DRX is configured, the UE performs a DRX operation according to DRX configuration information.

When the UE operates based on the DRX, the UE repeats ON/OFF for reception. For example, when the DRX is configured, the UE attempts to receive/detect a PDCCH (e.g., PDCCH monitoring) only in a predetermined time interval (e.g., ON), and does not attempt to receive the PDCCH in the remaining time period (e.g., OFF/sleep).

At this time, a time period during which the UE should attempt to receive the PDCCH is referred to as an On-duration, and this on-duration is defined once per DRX cycle. The UE may receive DRX configuration information from a gNB through a RRC signaling and operate as the DRX through a reception of the (Long) DRX command MAC CE.

The DRX configuration information may be included in the MAC-CellGroupConfig. The IE MAC-CellGroupConfig is used to configure MAC parameters for a cell group, including DRX.

DRX (Discontinuous Reception) means an operation mode for enabling a UE (User Equipment) to reduce battery consumption so that the UE may receive/monitor a downlink channel discontiguously. That is, a UE configured with DRX may reduce power consumption by receiving a DL signal discontiguously. The DRX operation is performed in a DRX cycle indicative of a time interval in which On Duration is periodically repeated. The DRX cycle includes On Duration and sleep duration (or Opportunity for DRX). The On Duration indicates a time interval in which a UE monitors a PDCCH in order to receive the PDCCH. DRX may be performed in an RRC (Radio Resource Control)_IDLE state (or mode), an RRC_INACTIVE state (or mode), or an RRC_CONNECTED state (or mode). In the RRC_IDLE state and the RRC_INACTIVE state, DRX is used to receive a paging signal discontiguously.
- RRC_Idle state: state in which a radio connection (RRC connection) is not established between a base station and a UE.
- RRC Inactive state: state in which a radio connection (RRC connection) has been established between a base station and a UE, but a radio connection is inactivated.
- RRC_Connected state: state in which a radio connection (RRC connection) has been established between a base station and a UE.

DRX is basically divided into Idle mode DRX, Connected DRX (C-DRX) and extended DRX. DRX applied in the RRC IDLE state is called Idle mode DRX, and DRX applied in the RRC CONNECTED state is called Connected mode DRX (C-DRX).

eDRX (Extended/enhanced DRX) is a mechanism capable of expanding the cycle of Idle mode DRX and C-DRX. In the Idle mode DRX, whether to permit eDRX may be configured based on system information (e.g., SIB 1).

The SIB1 may include an eDRX-Allowed parameter. The eDRX-Allowed parameter is a parameter indicating whether Idle mode extended DRX is permitted.

### (1) IDLE Mode DRX

In the IDLE mode, the UE may use DRX to reduce power consumption. One paging occasion (PO) may be a time interval (e.g., a slot or a subframe) in which a pagingradio network temporary identifier (P-RNTI) based physical downlink control channel (PDCCH) may be transmitted. The P-RNTI-based PDCCH may address/schedule a paging message. For P-RNTI-based PDCCH transmission, the PO may indicate a first subframe for PDCCH repetition.

One paging frame (PF) is one radio frame which may include one or a plurality of paging occasions. When DRX is used, a UE may be configured to monitor only one PO per DRX cycle. The PF, PO and/or PNB may be determined based on a DRX parameter provided via network signaling (e.g., system information).

Hereafter, 'PDCCH' may refer to MPDCCH, NPDCCH and/or normal PDCCH. Hereafter, 'UE' may refer to MTC UE, BL (Bandwidth reduced Low complexity)/CE (coverage enhanced) UE, NB-IoT UE, Reduced Capability (RedCap) UE, normal UE and/or IAB-MT (mobile termination).

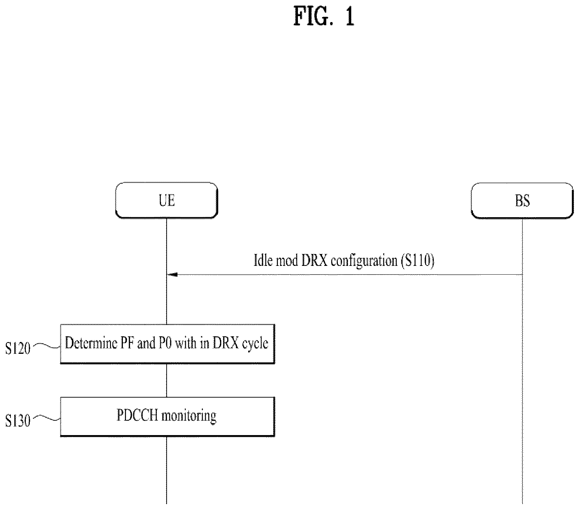

FIG. 1 is a flowchart showing an example of a method of performing an Idle mode DRX operation.

A UE receives, from a base station, Idle mode DRX configuration information through a higher layer signaling (e.g., system information) (S 110).

Furthermore, the UE determines a PF (Paging Frame) and a PO (Paging Occasion), for monitoring a physical downlink control channel (e.g., PDCCH) in a paging DRX cycle based on the Idle mode DRX configuration information (S120). In this case, the DRX cycle includes On Duration and sleep duration (or Opportunity for DRX).

Furthermore, the UE monitors a PDCCH in the PO of the determined PF (S130). The UE monitors only one time interval (PO) for each paging DRX cycle. For example, the time interval may be a slot or a subframe.

Additionally, if the UE receives a PDCCH (more exactly, CRC of PDCCH) scrambled by a P-RNTI during On duration (i.e., if paging is detected), the UE may transit to a connected mode and transmit or receive data with the base station.

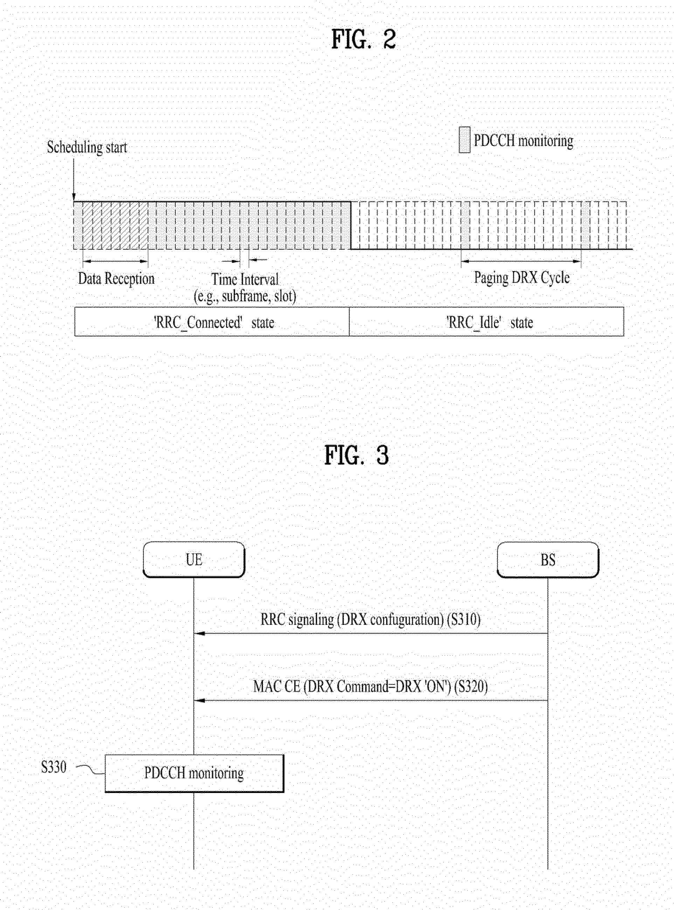

FIG. 2 is a diagram showing an example of an Idle mode DRX operation.

Referring to FIG. 2, if there is a traffic (data) toward a UE in the RRC_Idle state (hereinafter referred to as `Idle state'), paging occurs toward the corresponding UE.

Thus, the UE wakes up every (paging) DRX cycle and monitors a PDCCH.

If Paging is present, the UE transits to a Connected state, and receives data. Otherwise, the UE may enter a sleep mode again.

### (2) Connected Mode DRX (C-DRX)

C-DRX is DRX applied in the RRC Connected state. The DRX cycle of C-DRX may be configured with a Short DRX cycle and/or a Long DRX cycle. The Short DRX cycle is Optional.

If C-DRX is configured, a UE performs PDCCH monitoring for On Duration. If there is a PDCCH successfully detected during the PDCCH monitoring, the UE operates (or runs) an inactivity timer and maintains an awake state. In contrast, if there is no PDCCH successfully detected during the PDCCH monitoring, the UE enters to a sleep state after the On Duration is ended.

If C-DRX is configured, a PDCCH reception occasion (e.g., a slot having a PDCCH search space/candidate) may be configured discontiguously based on a C-DRX configuration. In contrast, if C-DRX is not configured, a PDCCH reception occasion (e.g., a slot having a PDCCH search space/candidate) may be configured contiguously in accordance with PDCCH search space configuration. Meanwhile, PDCCH monitoring may be limited in a time interval configured as a measurement gap, regardless of a C-DRX configuration.

FIG. 3 is a flowchart showing an example of a method of performing a C-DRX operation.

A UE receives, from a base station, RRC signaling (e.g., MAC-MainConfig IE) including DRX configuration information (S310). The DRX configuration information may include the following information.
- on-duration: the duration that the UE waits for, after waking up, to receive PDCCHs. If the UE successfully decodes a PDCCH, the UE stays awake and starts the drx-inactivity timer;
- onDurationTimer: the duration in which the DRX cycle starts. For example, the duration may refer to a time interval to be continuously monitored at the beginning of a DRX cycle, which may be represented in units of milliseconds (ms).
- drx-InactivityTimer: the duration after the PDCCH occasion in which a PDCCH indicates a new UL or DL transmission for the MAC entity. For example, the duration may be a time interval represented in units of ms after the UE decodes the PDCCH including scheduling information. That is, the duration refers to a duration in which the UE waits to successfully decode another PDCCH after decoding the PDCCH. If no other PDCCHs are detected within the corresponding duration, the UE transitions to the sleep mode.

The UE restarts the drx-inactivity timer after successfully decoding a PDCCH for initial transmission only except for a PDCCH for retransmission.
- drx-RetransmissionTimer: for DL, the maximum duration until a DL retransmission is received; for UL the maximum duration until a grant for UL retransmission is received. For example, for UL, drx-RetransmissionTimer indicates the number of slots in a bandwidth part (BWP) where a transport block (TB) to be retransmitted is transmitted. For DL, drx-RetransmissionTimer indicates the number of slots in a BWP in which a TB to be retransmitted is received.
- longDRX-Cycle: On Duration occurrence period
- drxStartOffset: a subframe number in which a DRX cycle is started
- drxShortCycleTimer: the duration the UE shall follow the Short DRX cycle;
- shortDRX-Cycle: a DRX Cycle operating as much as a drxShortCycleTimer number when Drx-InactivityTimer is terminated
- drx-SlotOffset: the delay before drx-onDurationTimer starts. For example, the delay may be expressed in units of ms, and more particularly, in multiples of 1/32 ms.
- Active time: total duration that the UE monitors PDCCH, which may include (a) the "on-duration" of the DRX cycle, (b) the time UE is performing continuous reception while the drx-inactivity timer has not expired, and (c) the time when the UE is performing continuous reception while waiting for a retransmission opportunity.

Specifically, when the DRX cycle is configured, an active time for a serving cell of a DRX group includes the following.
- (a) drx-onDurationTimer or (b) drx-InactivityTimer configured for the DRX group is running; or
- (c) drx-RetransmissionTimerDL or drx-RetransmissionTimerUL is running on any Serving Cell in the DRX group; or
- (d) ra-ContentionResolutionTimer or msgB-ResponseWindow is running; or
- (e) a Scheduling Request is sent on PUCCH and is pending; or
- (f) a PDCCH indicating a new transmission addressed to the C-RNTI of the MAC entity has not been received after successful reception of a Random Access Response for the Random Access Preamble not selected by the MAC entity among the contention-based Random Access Preamble.

Furthermore, if DRX 'ON' is configured through the DRX command of a MAC CE (command element) (S320), the UE monitors a PDCCH for the ON duration of a DRX cycle based on the DRX configuration (S330).

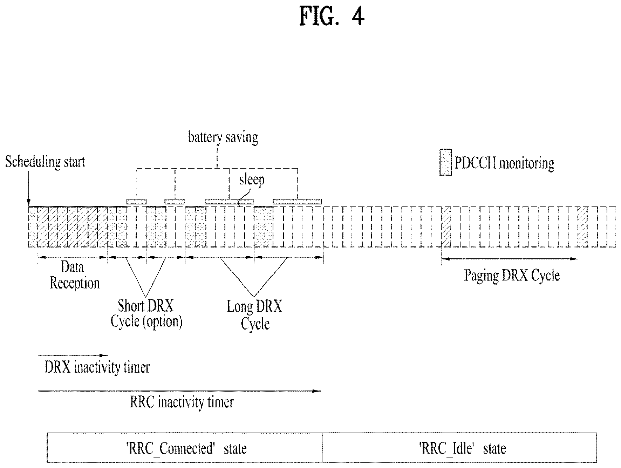

FIG. 4 is a diagram showing an example of a C-DRX operation.

Referring to FIG. 4 when the UE receives scheduling information (e.g., DL assignment or UL grant) in the RRC_Connected state (hereinafter referred to as the connected state), the UE runs a DRX inactivity timer and an RRC inactivity timer.

After the DRX inactivity timer expires, a DRX mode starts. The UE wakes up in a DRX cycle and monitors a PDCCH during a predetermined time (on duration timer).

In this case, if Short DRX is configured, when the UE starts the DRX mode, the UE first starts in a short DRX cycle, and starts to a long DRX cycle after the short DRX cycle is terminated. The Long DRX cycle is a multiple of the short DRX cycle. In the short DRX cycle, the UE wakes up more frequently. After the RRC inactivity timer expires, the UE shifts to an Idle state and performs an Idle mode DRX operation.

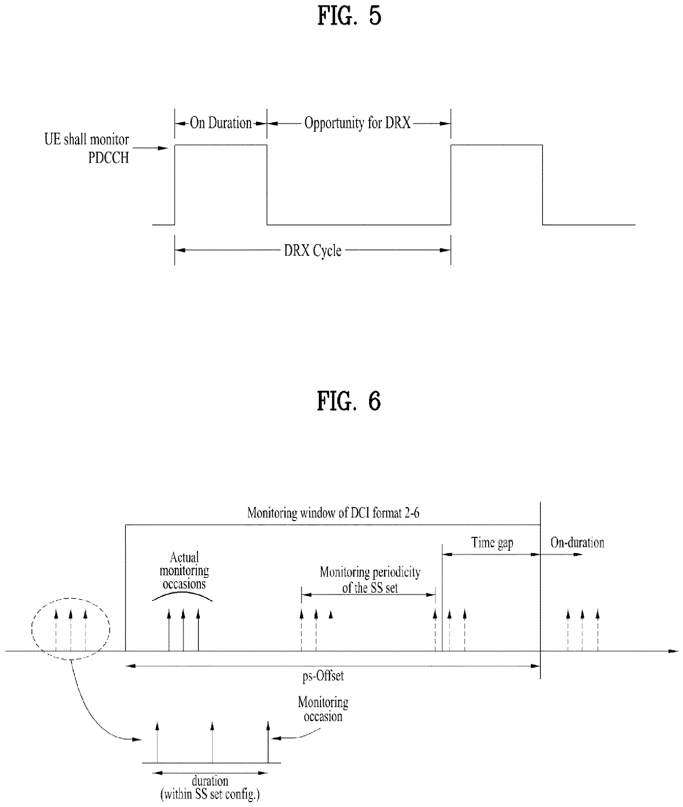

FIG. 5 illustrates a DRX cycle. The C-DRX operation has been introduced for power saving of the UE. If the UE receives no PDCCH within the on-duration defined for each DRX cycle, the UE enters the sleep mode until the next DRX cycle and does not perform transmission/reception.

On the other hand, when the UE receives a PDCCH within the on-duration, the active time may continue (or increase) based on the operations of an inactivity timer, a retransmission timer, etc. If the UE receives no additional data within the active time, the UE may operate in the sleep mode until the next DRX operation.

In NR, a wake-up signal (WUS) has been introduced to obtain additional power saving gain in addition to the existing C-DRX operation. The WUS may be to inform whether the UE needs to perform PDCCH monitoring within the on-duration of each DRX cycle (or a plurality of DRX cycles). If the UE detects no WUS on a specified or indicated WUS occasion, the UE may maintain the sleep mode without performing PDCCH monitoring in one or more DRX cycles associated with the corresponding WUS.

### (3) WUS (DCI Format 2_6)

According to the power saving technology of Rel-16 NR systems, when the DRX operation is performed, it is possible to inform the UE whether the UE needs to wake up for each DRX cycle by DCI format 2_6.

Referring to FIG. 6, a PDCCH monitoring occasion for DCI format 2_6 may be determined by ps-Offset indicated by the network and a time gap reported by the UE. In this case, the time gap reported by the UE may be interpreted as a preparation period necessary for an operation after the UE wakes up.

Referring to FIG. 6, the base station (BS) may provide the UE with a search space (SS) set configuration capable of monitoring DCI format 2_6. According to the corresponding SS set configuration, DCI format 2_6 may be monitored in consecutive slots as long as the duration at the monitoring periodicity interval.

In the DRX configuration, a monitoring window for monitoring DCI format 2_6 may be determined by the start time of the DRX cycle (e.g., a point where the on-duration timer starts) and ps-Offset configured by the BS. In addition, PDCCH monitoring may not be required in the time gap reported by the UE. Consequently, an SS set monitoring occasion on which the UE actually performs monitoring may be determined as a first full duration (i.e., actual monitoring occasions of FIG. 6) within the monitoring window.

If the UE detects DCI format 2_6 in the monitoring window configured based on ps-Offset, the UE may be informed by the BS whether the UE wakes up in the next DRX cycle.

In the current NR standards, the SS set group switching has been defined to reduce the power consumption of the UE. According to the SS set group switching, the UE may be configured with a plurality of SS set groups, and an SS set group to be monitored by the UE among the plurality of SS set groups may be indicated. In addition, the UE may monitor an SS set included in the corresponding SS set group according to the corresponding indication and skip monitoring of SS sets not included in the corresponding SS set group.

For example, the UE may be provided with a list of SS set groups configured with a Type 3-PDCCH common search space (CSS) set and/or a user-specific search space (USS) set. In addition, if a list of SS set groups is provided, the UE may monitor SS sets corresponding to group index #0.

The UE may perform the SS set group switching operation depending on whether SearchSpaceSwitchTrigger is configured.

If SearchSpaceSwitchTrigger is configured for the UE, the UE may switch the SS set group according to the indication of DCI format 2_0.

For example, if the value of an SS Set Group Switching Flag field in DCI format 2_0 is 0, the UE may start monitoring SS set group #0 after a predetermined time from the time when the UE receives DCI format 2_0 and stop monitoring SS set group #1.

If the value of the SS Set Group Switching Flag field in DCI format 2_0 is 1, the UE may start monitoring SS set group #1 after a predetermined time from the time when the UE receives DCI format 2_0 and stop monitoring SS set group #0. If the UE starts monitoring SS set group #1, the UE may start counting a timer configured by SearchSpaceSwitchTimer. If the timer expires, the UE may start monitoring SS set group #0 after a predetermined time from the time when the timer expires and stop monitoring SS set group #1.

If SearchSpaceSwitchTrigger is not configured for the UE, the UE may change the SS set group based on DCI reception. For example, when the UE receives the DCI while monitoring SS set group #0 (or SS set group #1), the UE may start monitoring SS set group #1 (or SS set group #0) after a predetermined time from the time when the UE receives the DCI and stop monitoring SS set group #0 (or SS set group #1). In this case, the UE may start counting the timer configured by SearchSpaceSwitchTimer. If the timer expires, the UE may start monitoring SS set group #0 (or SS set group #1) after a predetermined time from the time when the timer expires and stop monitoring SS set group #1 (or SS set group #0).

The UE may start monitoring SS set group #0 (or SS set group #1) after the predetermined time from the time when the UE receives DCI format 2_0 as described above. In this case, monitoring SS set group #0 (or SS set group #1) after the predetermined time may mean that monitoring of SS set group #0 (or SS set group #1) may start from the first slot (or applicable slot boundary) after at least P_{switch} symbols from the last symbol of the PDCCH including the received DCI. This is because the UE may require a prescribed time to decode the DCI, confirm an SS set group switching indication, and perform an SS set group switching operation actually.

In this case, P_{switch} may be configured by RRC signaling. Based on the smallest subcarrier spacing (SCS) (u) among SCSs of all DL BWPs configured for the capability and serving cell (or a set of serving cell) of the UE, the minimum P_{switch} value may be defined as shown in Table 1 below.

**[Table1]**

| u | Minimum P_{switch} value for UE processing capability 1 [symbols] | Minimum P_{switch} value for UE processing capability 2 [symbols] |
|---|---|---|
| 0 | 25 | 10 |
| 1 | 25 | 12 |
| 2 | 25 | 22 |

### Physical Downlink Control Channel (PDCCH)

A PDCCH carries downlink control information (DCI). For example, the PDCCH (i.e., DCI) may carry: transmission formats and resource allocation of a downlink shared channel (DL-SCH); resource allocation information on an uplink shared channel (UL-SCH); paging information on a paging channel (PCH); system information on a DL-SCH; resource allocation information on a higher layer control message such as a random access response transmitted over a physical downlink shared channel (PDSCH); transmit power control commands; and activation/deactivation of configured scheduling (CS). The DCI includes a cyclic redundancy check (CRC), and the CRC is masked/scrambled with various identifiers (e.g., radio network temporary identifier (RNTI)) according to the owner or use purpose of the PDCCH. For example, if the PDCCH is for a specific UE, the CRC is masked with a UE ID (e.g., cell-RNTI (C-RNTI)). If the PDCCH is for paging, the CRC is masked with a paging RNTI (P-RNTI). If the PDCCH is for system information (e.g., system information block (SIB)), the CRC is masked with a system information RNTI (SI-RNTI). If the PDCCH is for a random access response, the CRC is masked with a random access-RNTI (RA-RNTI).

For PDCCH reception, the UE may monitor (e.g., blind decoding) a set of PDCCH candidates in a CORESET. A PDCCH candidate may mean CCE(s) monitored by the UE for PDCCH reception/detection. PDCCH monitoring may be performed on one or more CORESETs in an active DL BWP on each active cell in which the PDCCH monitoring is configured. The set of PDCCH candidates monitored by the UE may be defined as a PDCCH search space (SS) set. The SS set may be divided into a common search space (CSS) set or a UE-specific search space (USS) set.

The UE may monitor PDCCH candidates in one or more SS sets in a slot according to CORESET/SS set configurations. An occasion (e.g., time/frequency resource) to monitor PDCCH candidates is defined as a PDCCH (monitoring) occasion. One or more PDCCH (monitoring) occasions may be configured within a slot.

Table 2 shows DCI formats transmitted over a PDCCH.

**[Table 2]**

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group based (CBG-based) (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or UL scheduling information. DCI format 2_0 may be used to provide dynamic slot format information (e.g., dynamic SFI) to the UE, and DCI format 2_1 may be used to provide downlink pre-emption information to the UE. UEs defined as one group may be provided with DCI format 2_0 and/or DCI format 2_1 over a group common PDCCH, which is a PDCCH defined for a group of UEs.

DCI format 0_0 and DCI format 1_0 may be referred to as fallback DCI formats, whereas DCI format 0_1 and DCI format 1_1 may be referred to as non-fallback DCI formats. The fallback DCI formats maintain the same DCI size/field configuration regardless of UE configurations. In contrast, non-fallback DCI formats have different DCI size/field configurations depending on the UE configurations.

The embodiments described below may be applied to, for example, extended reality (XR). XR is a concept that encompasses augmented reality (AR), virtual reality (VR), and mixed reality (MR). According to the features of XR, the time when traffic is expected to be received is fixed by frame per second (FPS), and due to the effect of jitter, the expected reception time may be delayed or advanced. The jitter of XR traffic appears as a truncated Gaussian probability distribution. Therefore, the power saving effect may be expected by periodically configuring DRX according to FPS. In addition, if PDCCH monitoring adaptation is configured even though no DRX is configured, the power saving effect may be expected only by the PDCCH monitoring adaptation. The power saving effect may be expected by configuring both the DRX and PDCCH monitoring adaptation.

The expected time of receiving traffic and the expected time of receiving in consideration of the effect of jitter may be expressed as a probability, and the following embodiments are applicable to achieve the power saving effect in the XR environment as described above.

As an example, as the probability of jitter decreases at a point in time that is relatively far from the expected time of receiving traffic, the reception probability decreases. Thus, the UE may sparsely monitor PDCCHs for power saving. On the other hand, as the probability of jitter increases at a point in time close to the expected time of receiving traffic, the reception probability increases. The UE may densely monitor PDCCHs to adjust the power consumption depending on the reception probability. To this end, an SS set group including SS sets for dense PDCCH monitoring may be set to SS set group #0, and an SS set group including SS sets for sparse PDCCH monitoring may be set to SS set group #1. In other words, the SS set group switching operation may be configured for XR in consideration of jitter.

As another example, the UE may perform PDCCH monitoring during a short period with a high probability of receiving traffic due to a high probability of jitter and then repeat a micro-sleep operation. Accordingly, when the UE does not normally receive traffic, the UE may expect the power saving effect by performing the micro-sleep operation quickly. Then, the UE may perform PDCCH monitoring to receive retransmitted traffic, thereby increasing the efficiency of the PDCCH monitoring. In other words, the PDCCH monitoring skipping operation may be configured for XR in consideration of jitter.

While the disclosure proposes operations based on DCI reception within a DRX active time as an example, the operations may be equally applied when the UE is configured with no DRX.

The disclosure proposes methods by which the UE is configured/instructed with different PDCCH monitoring adaptation for each DCI format and performs PDCCH monitoring based on the PDCCH monitoring adaptation.

The UE may be configured with a maximum of 10 SS sets per BWP. The UE may monitor PDCCH candidates included in the SS sets (hereinafter referred to as SS set monitoring).

Considering that the UE needs to perform blind decoding (BD) on a PDCCH as the UE does not know at which point in time and in which DCI format the PDCCH will be received, PDCCH monitoring during the DRX operation accounts for a significant portion of power consumption.

As a technology for power saving in wireless communication systems (e.g., Rel-17 NR system), there is discussion about PDCCH monitoring adaptation, which involves adjusting the frequency of PDCCH monitoring performed by the UE during the DRX active time to reduce power consumption. In general, PDCCH monitoring adaptation may mean an operation for reducing the frequency of times of PDCCH monitoring.

As an example of the PDCCH monitoring adaptation, PDCCH monitoring skipping (hereinafter, skipping) and SS set group switching (hereinafter, switching) are considered.

PDCCH monitoring skipping means stopping PDCCH monitoring for a predetermined duration (e.g., PDCCH monitoring skipping duration). The SS set group (SSSG) switching means dividing configured SS sets into a plurality of groups, indicating switching to one group among the plurality of groups according to the purpose of use, and then monitoring SS sets included in the corresponding group.

For PDCCH monitoring adaptation, the BS may use various DCI formats to indicate information related to the PDCCH monitoring adaptation to the UE.

The disclosure proposes various methods of setting a PDCCH monitoring skipping duration, which refers to a time period during which a UE actually performs a PDCCH monitoring skipping operation as one of PDCCH monitoring adaptation operations. The PDCCH monitoring adaptation operations are mainly discussed in the Rel-17 NR power saving section, and may be used in various environments after they were introduced into the actual NR standards. At the Rel-17 NR standardization meeting RAN1#106-e, it was agreed that PDCCH monitoring adaptation may be indicated in an up to 2-bit field of scheduling DCI, as shown in [Table 3] below.

**[Table 3]**

| **Agreement** |
|---|
| At most 2 bit indication in self-scheduling DCIs (i.e., DCI format 1-1/0-1/1-2/0-2) may be specified for triggering the PDCCH monitoring adaptation in a single cell |
| FFS: the bit size of the indication is configurable |
| FFS: bit mapping to the PDCCH monitoring behaviour |
| FFS: details of indication of multiple cells case |

[Table 3] applies only when PDCCH monitoring adaptation is indicated by scheduling DCI in Rel-17. Therefore, a bit field of 2 bits or more may be used in a PDCCH monitoring adaptation indication through non-scheduling DCI and/or a PDCCH monitoring adaptation indication in extended reality (XR) that may be discussed in Rel-18 in the future. The disclosure proposes a method of configuring not only a PDCCH monitoring skipping duration which may be included in a PDCCH monitoring skipping configuration in Rel-17 NR, but also a PDCCH monitoring skipping duration that may be indicated in various environments.

A method proposed based on C-DRX applied to a UE in an RRC_CONNECTED state is described in the disclosure, to which the disclosure is not limited. For example, those skilled in the art may readily infer that the disclosure may be extended to other methods (e.g., DRX applied to a UE in an RRC_IDLE state) in which a specific duration during which a UE does not have to expect reception of a DL signal may be defined with a periodicity.

Therefore, it is obvious that the proposed methods of the disclosure are applicable to all types of transmission and reception methods expected by a BS and a UE as long as the principle of the disclosure is not violated, even if they are not separately described. For convenience of description, the term DRX is used as a general concept covering the term C-DRX in the disclosure.

Further, while the disclosure takes examples in the context of an NR system to describe the principle of the disclosure, the proposed methods are not limited to a transmission and reception scheme of NR, unless otherwise specified. In addition, while the disclosure takes examples in the context of the characteristics and structure of a UE supporting C-DRX to describe the principle of the disclosure, the proposed methods are not limited to a UE supporting C-DRX, unless otherwise specified. Therefore, it is obvious that the proposed methods of the disclosure are applicable to all wireless communication transmission and reception structures and services, as long as the principle of the disclosure is not violated, even if they are not separately described.

The distinction between methods or options in the following description is intended to clarify the description, not limited to meaning that each method or option should be implemented in an independent manner. For example, although the methods/options described below may each be implemented individually, at least some of them may be implemented in combination unless conflicting with each other.

The disclosure proposes methods of a BS for configuring a UE in an RRC_CONNECTED state with a PDCCH monitoring skipping duration that may be indicated to a UE configured with PDCCH monitoring adaptation (particularly, PDCCH monitoring skipping). These methods allow the UE to be configured with PDCCH monitoring skipping durations in various communication environments including a Rel-17 NR environment, so that the UE may perform a PDCCH monitoring skipping operation. Therefore, the power saving efficiency of the UE may be improved, and the latency of transmission and reception of control/traffic information may be reduced.

In a method of configuring a PDCCH monitoring skipping duration described later, a UE may receive information related to PDCCH monitoring adaptation (particularly, PDCCH monitoring skipping) from a BS. Further, the information related to PDCCH monitoring adaptation may include information related to an indication of a PDCCH monitoring adaptation operation and a UE operation when DCI is received (and/or an operation of a UE for which the DCI reception-related operation is indicated/configured. The method may include a method of configuring PDCCH monitoring skipping, determining and configuring information related to a PDCCH monitoring skipping duration, notifying the UE of the information, and determining a PDCCH transmission including an indication of a PDCCH monitoring skipping operation of the UE based on the information by the BS. Additionally, the proposed method may include a process in which the UE transmits a signal and channel to indicate its capabilities, and the BS receives them.

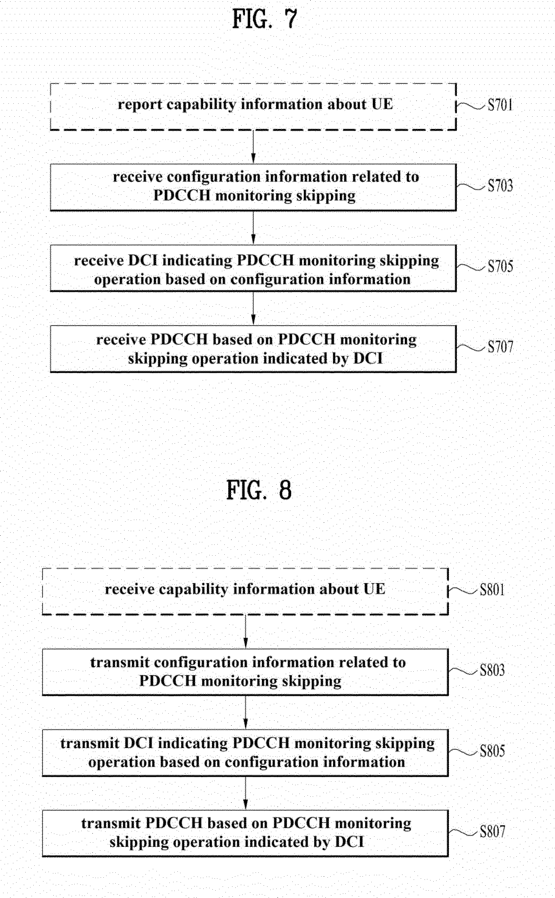

Hereinafter, overall operation processes in which the UE and BS transmit and receive a PDSCH according to the methods proposed in the disclosure will be described with reference to FIGS. 7 to 9

FIG. 7 is a diagram for explaining an overall operation process for the UE to receive a PDSCH according to the methods proposed in the disclosure.

To support the operations proposed in the disclosure, the UE may report information about UE capabilities to the BS (S701). The capability information may include capability information indicating whether SSSG switching and/or PDCCH monitoring skipping are supported.

S701 may be omitted in specific cases (for example, when the BS already has the information or when each operation method is modified due to the needs of the BS).

To support the operations proposed in the disclosure, the UE may receive first configuration information related to PDCCH monitoring skipping and/or a PDCCH monitoring skipping duration and/or second configuration information related to a DCI format that may indicate the PDCCH monitoring skipping and/or the PDCCH monitoring skipping duration (S703). Alternatively, the first configuration information and the second configuration information may be received in a method (e.g., DCI or a MAC CE/header) of specifically indicating one of a plurality of configurations related to a plurality of PDCCH monitoring skipping durations and DCI formats that may indicate the PDCCH monitoring skipping durations, which are semi-statically provided to the UE.

The UE may expect an available reception time of DCI including a PDCCH monitoring skipping indication and a related PDCCH monitoring skipping operation scheme based on the first configuration information related to the PDCCH monitoring skipping and/or the PDCCH monitoring skipping duration and/or the second configuration information related to the DCI format that may indicate the PDCCH monitoring skipping and/or the PDCCH monitoring skipping duration, and receive and decode the DCI at the position of the available reception time (S705). Further, the UE may perform a PDCCH monitoring skipping operation based on the PDCCH monitoring skipping and/or PDCCH monitoring skipping duration indicated by the received DCI, and receive a PDCCH based on the PDCCH monitoring skipping operation (S707).

A specific method of operating the UE in S703 and S707 may be based on at least one of [Method 1] to [Method 3].

FIG. 8 is a diagram illustrating an overall operation process of a BS according to the proposed methods of the disclosure.

The BS may receive UE capability information from a UE to support the operations proposed in the disclosure (S801). The capability information may include capability information indicating whether SSSG switching and/or PDCCH monitoring skipping is supported. Further, the capability information may include information about a UE-preferred PDCCH monitoring skipping duration.

S801 may be skipped in a specific situation (e.g., when the BS already has prior information or when each operation method is changed due to the needs of the BS).

To support the operations proposed in the disclosure, the BS may transmit first configuration information related to PDCCH monitoring skipping and/or a PDCCH monitoring skipping duration and/or second configuration information related to a DCI format that may indicate the PDCCH monitoring skipping and/or the PDCCH monitoring skipping duration (S803). Alternatively, the first configuration information and the second configuration information may be transmitted in a method (e.g., DCI or a MAC CE/header) of specifically indicating one of a plurality of configurations related to a plurality of PDCCH monitoring skipping durations and DCI formats that may indicate the PDCCH monitoring skipping durations, which are semi-statically provided to the UE.

The BS may determine an available reception time of DCI including a PDCCH monitoring skipping indication and a related PDCCH monitoring skipping operation scheme based on the first configuration information related to the PDCCH monitoring skipping and/or the PDCCH monitoring skipping duration and/or the second configuration information related to the DCI format that may indicate the PDCCH monitoring skipping and/or the PDCCH monitoring skipping duration, and transmit the DCI at the position of the available reception time (S805). Further, the BS may transmit a PDCCH based on the PDCCH monitoring skipping and/or PDCCH monitoring skipping duration indicated by the transmitted DCI (S807).

A specific method of operating the UE in S803 and S807 may be based on at least one of [Method 1] to [Method 3].

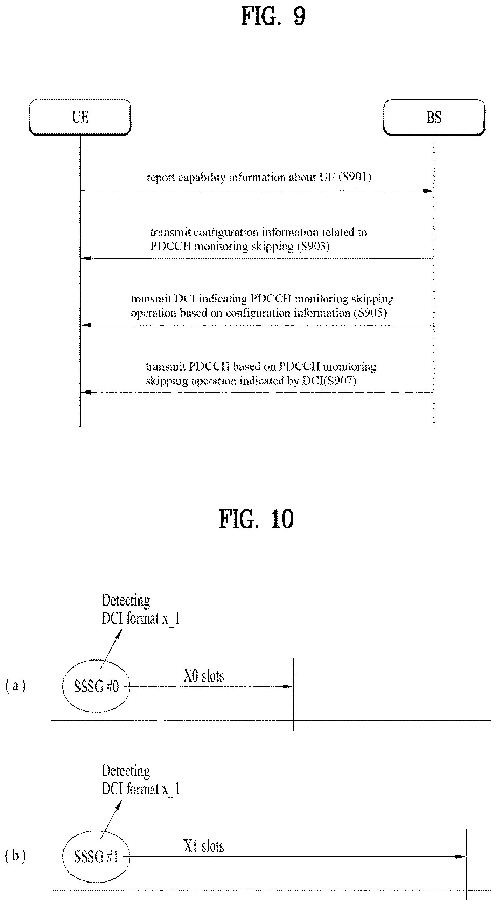

FIG. 9 is a diagram illustrating an overall operation process of a network according to the proposed methods of the disclosure.

A UE may report UE capability information to a BS to support the operations proposed in the disclosure (S901). The capability information may include capability information indicating whether SSSG switching and/or PDCCH monitoring skipping is supported. Further, the capability information may include information about a UE-preferred PDCCH monitoring skipping duration.

S901 may be skipped in a specific situation (e.g., when the BS already has prior information or when each operation method is changed due to the needs of the BS).

To support the operations proposed in the disclosure, the BS may transmit first configuration information related to PDCCH monitoring skipping and/or a PDCCH monitoring skipping duration and/or second configuration information related to a DCI format that may indicate the PDCCH monitoring skipping and/or the PDCCH monitoring skipping duration (S903). Alternatively, the first configuration information and the second configuration information may be transmitted in a method (e.g., DCI or a MAC CE/header) of specifically indicating one of a plurality of configurations related to a plurality of PDCCH monitoring skipping durations and DCI formats that may indicate the PDCCH monitoring skipping durations, which are semi-statically provided to the UE.

The BS may determine an available reception time of DCI including a PDCCH monitoring skipping indication and a related PDCCH monitoring skipping operation scheme based on the DCI based on the first configuration information related to the PDCCH monitoring skipping and/or the PDCCH monitoring skipping duration and/or the second configuration information related to the DCI format that may indicate the PDCCH monitoring skipping and/or the PDCCH monitoring skipping duration, and transmit the DCI at the position of the available reception time (S905). Further, the BS may transmit a PDCCH to the UE based on the PDCCH monitoring skipping and/or PDCCH monitoring skipping duration indicated by the transmitted DCI (S907).

A specific method of operating the UE in S903 and S907 may be based on at least one of [Method 1] to [Method 3].

In other words, the proposed methods of the disclosure may be performed by selectively applying some of the following methods. The methods may be performed independently without any combination, or one or more of them may be combined to be performed in conjunction with each other. Some terms, symbols, and sequences used to describe the proposed methods may be replaced with other terms, symbols, and sequences as long as the principles of the proposed methods are maintained.

Although exemplary PDCCH monitoring skipping configurations and exemplary PDCCH monitoring skipping duration configurations for a UE are described below to describe the principles of the methods of the disclosure, the proposed methods are not limited to any specific type of UE operation, unless otherwise specified.

Therefore, it is obvious that the proposed methods of the disclosure are applicable to any PDCCH monitoring operation based on any PDCCH monitoring skipping duration configuration as long as the principles of the proposed methods are not violated, even if they are not separately described.

The disclosure is based on the assumption that during a DRX operation of a UE, PDCCH monitoring adaptation (e.g., SSSG switching and/or PDCCH monitoring skipping) is indicated to the UE by a BS, and the UE performs the PDCCH monitoring adaptation. SSSG switching refers to reduction of the number of monitored SS sets to some but not zero, and PDCCH monitoring skipping refers to stopping PDCCH monitoring for a specific period of time.

The disclosure is described in the context of a C-DRX UE, by way of example, which should not be construed as limiting the disclosure. A PDCCH monitoring adaptation operation may also be indicated to a UE in a non-DRX environment. Therefore, the proposed methods of the disclosure may be applied even in an environment other than DRX.

For SSSG switching, for example, two SSSGs each including SS sets may be defined. In general, each SSSG may include a smaller number of SS sets than configurable in one bandwidth part (BWP) of the UE. The UE is indicated to monitor only one of the two SSSGs, and the monitoring of fewer SS sets brings about the effect of power saving, compared to monitoring all SS sets configurable in one BWP of an NR UE. However, two SSSGs are not necessarily configured for the UE, and three or more SSSGs may be configured depending on a configuration.

Further, for example, PDCCH monitoring skipping means stopping PDCCH monitoring in all or some of configured SS sets during a specific duration indicated to the UE. The PDCCH monitoring skipping duration of the UE may be set to one or more symbols or one or more slots, or may be configured to last until a next DRX cycle. As the UE stops PDCCH monitoring for a short period of time through the PDCCH monitoring skipping operation, the UE may achieve a micro-sleep effect and thus the power saving effect.

SSSG switching was introduced in the Rel-16 NR standard, for the purpose of shared spectrum channel access (i.e., NR-U), and as one of PDCC monitoring adaptation operations of a UE in an RRC_CONNECTED state in the Rel-17 NR standard, for the purpose of power saving. In addition, it was decided to introduce PDCCH monitoring skipping, which stops PDCCH monitoring, as another PDCCH monitoring adaptation technique.

As described above, when PDCCH monitoring adaptation for Rel-17 NR power saving is indicated by scheduling DCI, a field of up to 2 bits may be used. Configuration cases related to configuration of the bit field were agreed upon in RAN1#106bis-e as illustrated in [Table 4] below.

**[Table 4]**

| **Agreement** |
|---|
| For Beh 1A, |
| The UE may be configured to be indicated by DCI a value of X (i.e., skipping duration) among multiple RRC configured values by scheduling DCIs indicating PDCCH schedules data |
| The bits for indicating PDCCH monitoring adaptation also indicating skipping duration. |
| Details FFS |

| **Agreement** |
|---|
| The bit mapping of DCI indication PDCCH monitoring adaptation is as follows, |
| For Case 1 (i.e., PDCCH skipping), the following is supported |
| 1-bit in scheduling DCI is supported to indicate PDCCH monitoring adaptation UE behaviors if *M*=1 |
| '0' is Beh 1 and '1' is Beh 1A |
| 2-bit in scheduling DCI is supported to indicate PDCCH monitoring adaptation UE behaviors if *M*=2 or 3 |
| '00' is Beh 1 |
| '01' is Beh 1A with skipping duration 1 |
| '10' is Beh 1A with skipping duration 2 |
| '11' is Beh 1A with skipping duration 3 if M=3, reserved if M=2 |
| For Case 2 (i.e., 2 SSSG switching) , the following is supported |
| 1-bit in scheduling DCI is supported to indicate PDCCH monitoring adaptation UE behaviors |
| '0' is Beh 2 and '1' is Beh 2A |
| For Case 3 (i.e., 3 SSSG switching) , the following is supported |
| 2-bit in scheduling DCI is supported to indicate PDCCH monitoring adaptation UE behaviors |
| '00' is Beh 2 |
| '01' is Beh 2A |
| '10' is Beh 2B |
| ['11' is reserved] |
| For Case 4 (i.e., 2 SSSG switching with PDCCH skipping) , the following is supported |
| 2-bit in scheduling DCI is supported to indicate PDCCH monitoring adaptation UE behaviors, |
| FFS details bit mapping |
| FFS: For Case 5 (i.e., 3 SSSG switching and skipping) |
| 2-bit in scheduling DCI is supported to indicate PDCCH monitoring adaptation UE behaviors |
| '00' is Beh 2 |
| '01' is Beh 2A |
| '10' is Beh 2B |
| '11' is Beh 1A |
| FFS Timer behavior when Beh 1A is indicated |
| Note: The UE may be configured to be indicated by DCI a value of X (i.e., skipping duration) among M RRC configured values by scheduling DCIs indicating PDCCH schedules data |
| FFS whether to restrict Skipping duration to be shorter than SSSG initial timer value |
| FFS whether the configuration is same or different for DCI format x_1 and DCI format x_2 |

[Table 4] is an excerpt from the part related to PDCCH monitoring skipping in the agreement discussed in RAN1#106bis-e. As noted from the above agreement, up to three durations may be indicated for PDCCH monitoring skipping depending on the cases, and the corresponding durations may be selected from various RRC-configured values. In other words, in relation to Rel-17 PDCCH monitoring skipping, multiple candidate values may be RRC-configured as PDCCH monitoring skipping durations. Further, values to be actually indicated by DCI may be selected from among the candidate values and indicated to the UE by RRC. In addition to a PDCCH monitoring skipping indication through scheduling DCI, a PDCCH monitoring skipping indication through non-scheduling DCI is under discussion. Considering that the non-scheduling DCI does not include scheduling information and has relatively many spare bits in DCI formats discussed as candidates (e.g., DCI format 1_1 and/or DCI format 2_6 that does not include scheduling information), a field exceeding 2 bits may be configured to indicate PDCCH monitoring skipping. Therefore, it may be considered that a greater number of cases may be indicated through non-scheduling DCI than through scheduling DCI.

Further, it may be considered to configure various PDCCH monitoring skipping durations so as to be indicated more efficiently in various environments in which PDCCH monitoring adaptation is applicable. For example, when information unnecessary for a reduced capability (RedCap) device may be reduced in DCI to reduce the blocking error rate (BER) of the RedCap device, the spare bits available in the DCI may increase. Therefore, these spare bits may be utilized for more fine PDCCH monitoring adaptation. For example, in the case of an XR device, traffic may be different from that of an existing NR device. Therefore, an additional indication suitable for an XR environment may be required in addition to the already standardized PDCCH monitoring adaptation indication.

The disclosure proposes methods of setting/configuring a PDCCH monitoring skipping duration that may be indicated in relation to PDCCH monitoring skipping as PDCCH monitoring adaptation, which may be indicated in up to 2 bits in scheduling DCI. In addition, the disclosure proposes methods of setting/configuring a PDCCH monitoring skipping duration that may be indicated in various environments as well as by Rel-17 scheduling DCI. A UE configured with a PDCCH monitoring skipping duration proposed in the disclosure may be indicated to perform PDCCH monitoring skipping and perform the indicated PDCCH monitoring skipping in various communication environments including an eMBB environment.

Although the proposed methods of the disclosure are described in the context of a 2-bit field configured in scheduling DCI and several exemplary environments (e.g., XR and RedCap) by way of example, the disclosure is not necessarily limited thereto. In other words, a field exceeding 2 bits may be configured in scheduling DCI, and the proposed methods may be applied in communication environments other than the exemplary environments.

### [Method 1] Method of configuring PDCCH monitoring skipping duration for Rel-17 NR device

### [Method 1-1] Configuration of PDCCH monitoring skipping duration according to configuration of up to 2-bit field in scheduling DCI

As described above, it was agreed that a PDCCH monitoring adaptation indication in scheduling DCI for Rel-17 NR power saving may be configured in up to 2 bits. Additionally, at least one of a plurality of RRC-configured values may be configured as a PDCCH monitoring skipping duration that may be indicated. Therefore, [Method 1] proposes a method of configuring a PDCCH monitoring skipping duration which may actually be configured/indicated.

Regarding another PDCCH monitoring adaptation technique, SSSG switching, an SSSG switching timer, which may refer to a time taken for a UE to fall back to a default SSSG during monitoring in an SSSG to which the UE has switched after SSSG switching is indicated to the UE, was agreed upon in RAN1#106bis-e, as illustrated in [Table 5] below.

**[Table 5]**

| **Agreement** | |
|---|---|
| The value of the SSSG switching timer in slots for SSSG#1 and/or SSSG#2 may be configured as | |
| o | {[1...20,40,60,80,100]} for 15 kHz SCS, |
| o | {[1...40, 80,100,160,200]} for 30 kHz SCS, |
| o | {[1...80, 160,200,320,400]} for 60kHz SCS, |
| o | {[1...160,320,400,640,800]} for 120kHz SCS |

The per-SCS values are configured in slots for each SCS based on { 1, 20, 40, 60, 80, 100ms}. In the case of SSSG switching introduced for NR-U in the existing Rel-16 NR standard, up to 20ms was supported according to the channel occupancy time (COT) of a UE depending on purposes. However, in the case of SSSG switching for Rel-17 power saving, it was agreed that a longer timer could be set because there was no need to be limited to 20ms. Further, a DRX inactivity timer for a UE was considered to introduce an SSSG switching timer of 20ms or larger. For example, considering configuration of a DRX inactivity timer that starts due to a new transmission, an SSSG switching timer of 40, 60, 80, and 100ms may be configured.

PDCCH monitoring adaptation refers to SSSG switching and PDCCH monitoring skipping, and 'strive for a common design' was agreed upon through discussion. In other words, SSSG switching and PDCCH monitoring skipping may be indicated by a single PDCCH monitoring adaptation field. Therefore, a common design is sought for SSSG switching and PDCCH monitoring skipping.

A PDCCH monitoring skipping duration plays a similar role to a SSSG switching timer by indicating how long a PDCCH monitoring skipping operation is to be maintained after PDCCH monitoring skipping is indicated to the UE. Therefore, it may be natural to configure a PDCCH monitoring skipping duration to be the same as an already determined SSSG switching timer. For example, as in the above agreement, the PDCCH monitoring skipping duration may be configured in slots for each SCS based on { 1, 20, 40, 60, 80, 100ms}.

Unlike an SSSG switching indication, a PDCCH monitoring skipping indication may indicate immediate termination of a current DRX cycle. Although immediate termination of the current DRX cycle may be indicated through a MAC CE, indicating it through DCI may allow the UE to perform a corresponding operation faster and more immediately. The indication of immediate termination of the current DRX cycle may be included as one of PDCCH monitoring skipping durations. For example, a duration such as 'skip to the next DRX cycle' may be included and treated the same as a general PDCCH monitoring skipping duration in slots. For example, one (e.g., '11') of the values of a PDCCH monitoring adaptation indication field indicating a PDCCH monitoring skipping duration may be mapped to 'skip to the next DRX cycle'. Additionally, when the PDCCH monitoring adaptation indication field of the DCI indicates the value corresponding to 'skip to the next DRX cycle', the UE may terminate the DRX cycle immediately after completing decoding the DCI.

The BS may or may not include the indication of immediate termination of the current DRX cycle on its own. Alternatively, the indication of immediate termination of the current DRX cycle may be necessarily included.

The indication of immediate termination of the current DRX cycle may be configured implicitly rather than explicitly configured as one PDCCH monitoring skipping duration as described above. For example, the PDCCH monitoring skipping duration may be configured in consideration of an inactivity timer (IAT) of connected-mode DRX. The IAT is one of timers by which the UE maintains a current DRX active time, and starts when a new transmission is scheduled. That is, scheduling information and a PDCCH monitoring adaptation indication may be received together through scheduling DCI. In this case, the UE may start a duration indicated by the PDCCH monitoring adaptation indication (e.g., an SSSG switching timer or a PDCCH monitoring skipping duration) simultaneously with starting the IAT or after a specific application delay.

Therefore, based on the IAT, the current DRX cycle may be indirectly terminated by configuring a time unit close to an IAT expiration time or exceeding the IAT expiration time as the duration indicated by the PDCCH monitoring adaptation indication. For example, when an IAT configured for the UE is 200ms, 200ms (or a time in ms equivalent to 200ms) may be included in the PDCCH monitoring skipping duration, and the duration may be indicated to the UE. In this case, although the UE starts the IAT according to a scheduled new transmission and maintains a DRX active time (i.e., DRX on), the UE may have to perform PDCCH monitoring skipping during the entire remaining DRX active time, because the indicated PDCCH monitoring skipping duration is larger than the remaining IAT. Therefore, the UE may immediately terminate the current DRX cycle and enter a sleep state.

The operation may involve an indication indicating termination of a current DRX cycle rather than configuring a separate PDCCH monitoring skipping duration. For example, as described above, when a PDCCH monitoring skipping duration aligned with an SSSG switching timer is configured, a PDCCH monitoring skipping duration of up to 100ms may be indicated, and the length of the DRX IAT may be set to a value less than the PDCCH monitoring skipping duration. Therefore, when the PDCCH monitoring skipping duration is indicated as a value larger than the length of the DRX IAT, the UE may immediately terminate the current DRX cycle as in the proposed method described above.

For example, according to the proposal of the disclosure, the PDCCH monitoring skipping duration may be configured as in the following example.
1) skippingDurationSCS15kHz enumerated{1, 20, 40, 60, 80, 100, skipToTheNextDRX}
2) skippingDurationSCS30kHz enumerated{1, 40, 80, 120, 160, 200, skipToTheNextDRX}
3) skippingDurationSCS60kHz enumerated{1, 80, 160, 200, 320, 400, skipToTheNextDRX}
4) skippingDurationSCS120kHz enumerated{1, 160, 320, 400, 640, 800, skipToTheNextDRX}

In the example, skipToTheNextDRX may or may not be included depending on a configuration. Additionally, the corresponding PDCCH monitoring skipping duration may be configured for each BWP, each cell, or (if SSSGs are configured) each SSSG, depending on a method.

### [Method 1-2] Independent configuration for each DCI format

A configuration that may indicate PDCCH monitoring adaptation (e.g., the cases of [Table 4]) may be different for each DCI format that the UE may receive. PDCCH monitoring adaptation may be indicated by scheduling DCI, DCI format x_1 and DCI format x_2 (where x is 0 or 1). The BS may flexibly indicate PDCCH monitoring adaptation to the UE to maximize the power saving effect by configuring different cases of PDCCH monitoring adaptation including PDCCH monitoring skipping for DCI format x_1 and DCI format x_2.

For example, PDCCH monitoring skipping durations may be configured differently for each DCI format. In general, DCI format x_2 has higher flexibility than DCI format x_1. Accordingly, a bit field such as the PDCCH monitoring adaptation indication field may be more flexibly configured. Therefore, the effect of reducing a DCI size compared to DCI format x_1 may be expected by removing an unnecessary bit field configuration in DCI format x_2. Therefore, the BS may configure the 2-bit PDCCH monitoring adaptation indication of case 1 in DCI format x_1, and configure the 1-bit PDCCH monitoring adaptation indication of case 1 in DCI format x_2.

For example, the BS may configure DCI format x_1 such that it may indicate PDCCH monitoring skipping durations X1, X2, and X3, and configure DCI format x_2 such that it may indicate a PDCCH monitoring skipping duration X4. X4 may be the same as or different from X1, X2, or X3. For example, the BS may allocate a frequently indicated PDCCH monitoring skipping duration as X4 and configure the remaining durations X1, X2, and X3.

Alternatively, the BS may configure the same 2-bit case (for example, the 2-bit case of Case 1) in DCI format x_1 and DCI format x_2 and configure different PDCCH monitoring skipping durations which may be indicated. In this case, up to 6 PDCCH monitoring skipping durations may be indicated, which allows a flexible indication of PDCCH monitoring adaptation.

While an example focusing on PDCCH monitoring skipping durations has been described in the disclosure, it is obvious that configurations of other cases including SSSG switching are also applicable to the proposed methods of the disclosure. In addition, independent configurations are possible between other DCI formats as well as DCI format x_1 and DCI format x_2. In another example, independent configurations between DCI format 0_0 and DCI format 1_0 and/or independent configurations between DCI format 0_2 and DCI format 1_2 may also be applied through the proposed method of the disclosure.

A PDCCH monitoring skipping duration in [Method 1-2] may be configured for each bandwidth part (BWP). For example, an SS set including a DCI format that may be monitored may be configured on a BWP basis. In the case where a PDCCH monitoring skipping duration is configured for each unit (e.g., cell) larger than a BWP, although total configurable candidate values are configured on a cell basis, actual values that may be indicated may be configured on a DCI format basis.

### [Method 1-3] Independent configuration of PDCCH monitoring skipping duration for each SSSG

When the monitoring adaptations of SSSG switching and PDCCH monitoring skipping are simultaneously configured for the UE, a PDCCH monitoring skipping duration may be configured for each SSSG. For example, when case 4 of [Table 4], in which both SSSG switching and PDCCH monitoring skipping are configured simultaneously, may be indicated through DCI format x_1, the UE may receive a PDCCH monitoring skipping indication while monitoring DCI, after switching to a specific SSSG. For example, when the UE is currently monitoring SSSG#0, the UE may interpret the indicated PDCCH monitoring skipping duration as X0 slots, and when the UE is currently monitoring SSSG#1, the UE may interpret the indicated PDCCH monitoring skipping duration as X1 slots. For example, referring to FIG. 10, when the UE detects in the SS sets of SSSG #1 that the PDCCH monitoring adaptation field of DCI format x_1 indicates PDCCH monitoring skipping (e.g., '11'), the UE may skip PDCCH monitoring during X1 slots, as illustrated in FIG. 10(b). When the UE detects the PDCCH monitoring indication in the SS sets of SSSG #0, the UE may skip PDCCH monitoring during X0 slots, as illustrated in FIG. 10(a). As such, even in the same PDCCH monitoring skipping indication state in the same DCI format, the indicated PDCCH monitoring skipping duration may be different depending on the SSSG currently monitored by the UE.

For example, referring to FIG. 10, when SSSG#0 is an SSSG configured for data reception efficiency and SSSG#1 is an SSSG configured for power saving, X1 may be set to be larger than X0 to meet the power saving purpose of SSSG#1, thereby configuring a longer PDCCH monitoring skipping duration.

On the other hand, because the UE is currently monitoring SSSG #1, when the PDCCH monitoring skipping duration is set to be long even though the UE has not received much data, data reception efficiency may be excessively reduced. Accordingly, X1 may be set to be less than X0, so that the data reception efficiency is not lower than a specific level.

Further, a UE configured with a PDCCH monitoring skipping duration may also be configured with an SSSG in which PDCCH monitoring is to be resumed after the UE ends the PDCCH monitoring skipping operation. For example, a PDCCH monitoring skipping duration configuration may be configured in the form of {duration, SSSG index}, which may represent a duration during which the UE actually applies PDCCH monitoring skipping and an SSSG including an SS set in which the UE is to monitor a PDCCH after completing the PDCCH monitoring skipping operation.

According to [Method 1], the PDCCH monitoring skipping duration may be interpreted differently depending on a DCI format or an SSSG in which a PDCCH is monitored, in spite of a bit value indicating the same state. Accordingly, more various PDCCH monitoring skipping durations may be indicated by the same number of bits. Further, the BS may indicate an appropriate PDCCH monitoring skipping operation according to the amount and characteristics of traffic to be scheduled currently by separately configuring PDCCH monitoring skipping durations according to the purposes or characteristics of DCI formats or SSGs in which a PDCCH is monitored, and indicating PDCCH monitoring skipping through a DCI format or SSSG suitable for a corresponding purpose or characteristic.

### [Method 2] Method of configuring PDCCH monitoring skipping durations in various environments

As described above, it may be considered to configure the PDCCH monitoring adaptation field in more bits than an up to 2-bit PDCCH monitoring adaptation field included in scheduling DCI. For example, for non-scheduling DCI, DCI format 1_1 (e.g., DCI without scheduling information) and/or DCI format 2_6 may be considered. In other words, it may be considered to indicate PDCCH monitoring adaptation by allocating more bits than scheduling DCI through a corresponding DCI format. Therefore, more diverse PDCCH monitoring skipping durations including the PDCCH monitoring skipping durations proposed in [Method 1] may be considered in [Method 2].

For example, in [Method 2], the PDCCH monitoring skipping durations proposed in [Method 1] may be further extended. An operation after PDCCH monitoring skipping ends may be further considered, in addition to a PDCCH monitoring skipping duration in slots. Particularly, for a UE configured with both PDCCH monitoring skipping and SSSG switching, states that may correspond to the PDCCH monitoring adaptation indication may be extended to {PDCCH monitoring skipping duration, index of SSSG to be monitored after PDCCH monitoring skipping}. For example, a combination of fallback to SSSG#0 after termination of PDCCH monitoring skipping and a PDCCH monitoring skipping duration may mean that the UE performs monitoring in an SSSG in which data transmission may be reliably performed after PDCCH monitoring skipping for a specific period of time.

When a PDCCH monitoring skipping duration and SSSG#1 switching are combined, this may imply that PDCCH monitoring is stopped according to PDCCH monitoring skipping for a specific period of time, and then the SSSG serving the purpose of power saving is monitored. In an SSSG switching operation according to each combination, a switching timer may or may not be applied.

### [Method 2-1] Skipping one or more DRX cycles

An operation of skipping the entire PDCCH monitoring operation in one or more subsequent DRX cycles by DCI or a wake-up signal (WUS) received in a DRX active time may be considered. When a corresponding indication is included in DCI format 2_6, the indication may be considered to serve as a WUS during a plurality of DRX cycles. This indication may be implemented by adding a bit to a wake-up indication field of DCI format 2_6. For example, when one bit is added, one of code-points (e.g., the bit values of the wakeup indication field) may indicate wake-up, and the remaining three code-points may indicate non-wake up during the next one, two, or three DRX cycles. Even if ps-WakeUp, which may configure a UE operation when a WUS is not received, is true, the wake-up indication in DCI format 2_6 may have priority over ps-WakeUp. In other words, when the UE fails to receive the WUS, even if the UE is configured to wake up in the next DRX cycle, the UE may not wake up in the next DRX cycle, prioritizing the wake-up indication in DCI format 2_6. For example, when the UE is indicated not to wake up for the next three DRX cycles through DCI format 2_6, the UE may maintain the sleep state without monitoring the WUS during the next three DRX cycles, regardless of ps-WakeUp.

The above operation may also be considered for other DCI formats that may be received within a DRX active time. For example, in addition to the PDCCH monitoring skipping durations described in [Method 1], a PDCCH monitoring skipping duration that prevents the UE from waking up during N (e.g., 1, 2, or 3) DRX cycles may be included. For example, when the above-mentioned state, skipToTheNextDRX is added and indicated, the UE may terminate the current DRX cycle after receiving DCI. In addition, when a state for configuring a duration such as skipToTheNextDRX2 is added, the UE may terminate the current DRX cycle and skip PDCCH monitoring without waking up until the next DRX cycle. In other words, as in the case of the WUS, the UE may maintain the sleep state regardless of ps-WakeUp without performing WUS monitoring during the corresponding PDCCH monitoring skipping duration. That is, when the above-described PDCCH monitoring skipping duration is indicated to the UE, the UE may operate as if ps-WakeUp is always absent.

In another example, WUS monitoring during a PDCCH monitoring skipping duration may be included in a PDCCH monitoring skipping duration configuration. For example, when the UE is indicated to skip one or more DRX cycles, the UE may operate as if ps-WakeUp is absent. Further, the UE may monitor/receive DCI at a time of monitoring DCI format 2_6 (e.g., at a DCI format 2_6 monitoring occasion), and turn on/off WUS monitoring within a PDCCH monitoring skipping duration by one bit allocated in the DCI.

Alternatively, one DRX cycle skipping duration may be configured in conjunction with WUS monitoring performed during the duration. For example, when the number of DRX cycles to skip is set to 1, 2, or 4, WUS monitoring may not be performed during the DRX cycles in the case of skipping of 1 or 2 DRX cycles, WUS monitoring may be performed during the DRX cycles in the case of skipping of 3 or 4 DRX cycles. In addition, when the UE is indicated to skip 4 DRX cycles to maintain the same skipping operation for a smaller number of DRX cycles, the UE may not monitor the WUS until skipping 2 DRX cycles and then resume WUS monitoring from the subsequent duration.

[Method 2-1] may ensure that the UE sleeps for a relatively long period of time, thereby maximizing power saving.

### [Method 2-2] Indication of PDCCH monitoring skipping duration in WUS

In such a case as XR, the UE may not receive data reliably at the same time as starting a DRX active time due to the effects of jitter or the like. Therefore, the BS may indicate both wake-up and PDCCH monitoring skipping for a specific period of time by a WUS, thereby preventing unnecessary power consumption of the UE during a time affected by jitter. On the other hand, when the BS may indicate the UE to switch to an SSSG serving the purpose of power saving or to an SSSG without any SS set for a specific period of time, this may be expected to bring a similar effect to indicating PDCCH monitoring skipping for a specific period of time.

Alternatively, the start point of a DRX On-duration may be delayed through indicated PDCCH monitoring skipping. Although this is similar to the operation of the UE that skips PDCCH monitoring for a specific period of time from the start time of a DRX active time as described above, the start and end time points of the DRX active time may be changed because the DRX On-duration actually starts late. That is, the BS may instruct the UE to delay the actual DRX active time during a time when the UE is affected by jitter. Therefore, the UE may interpret this as delaying a timer that should actually start until after a PDCCH monitoring skipping time.

Alternatively, when the above-described PDCCH monitoring skipping is indicated to the UE, the DRX on-duration timer starts. However, the UE may operate as if it is not in a DRX active time. In other words, although a timer (e.g., DRX on-duration timer) starts after the PDCCH monitoring skipping indication, the UE may start an operation to be performed during running of the timer, after the PDCCH monitoring skipping duration. The above-described methods differ in the start time of the timer (e.g., DRX On-duration timer) after the actual PDCCH monitoring skipping indication, which may result in different end times of the timer. For example, the start of the DRX On-duration timer is delayed in effect in the example described above, and thus the end time of the DRX On-duration timer may also be delayed by the delay of the start. On the other hand, in the example described later, even if the UE operates as if it is not in a DRX active time, the DRX On-duration timer actually starts, and thus the DRX On-duration timer ends as scheduled without delay.

While the above description has been given in the context of the WUS in the disclosure by way of example, it may also be applied to indicating PDCCH monitoring skipping (or PDCCH monitoring adaptation) through a general DCI format. For example, when PDCCH monitoring skipping is indicated to the UE by scheduling DCI, the UE should start the DRX inactivity timer due to a new transmission. The operations related to the DRX on-duration timer described above may be equally applied to the DRX inactivity timer. For example, a UE operation may change after the start of the DRX inactivity timer, or the actual start time of the DRX inactivity timer may be delayed. For example, when PDCCH monitoring skipping is indicated to the UE by scheduling DCI that indicates a new transmission, the DRX inactivity timer may start after a duration corresponding to the PDCCH monitoring skipping, or the DRX inactivity timer may start regardless of the PDCCH monitoring skipping and the actual PDCCH monitoring of the UE may be performed after the duration corresponding to the PDCCH monitoring skipping. In the former case, the end time of the DRX inactivity timer may be delayed by as much as the delay of the start of the DRX inactivity timer, whereas in the latter case, the DRX inactivity timer may end at an originally scheduled time regardless of the PDCCH monitoring skipping.

In other words, [Method 2-2] proposes a UE operation based on a relationship with a timer that may be started due to a PDCCH monitoring skipping (or PDCCH monitoring adaptation) indication.

### [Method 2-3] Indication of PDCCH monitoring skipping duration in conjunction with DRX IAT

A PDCCH monitoring skipping duration that may be indicated to the UE may be configured in conjunction with a DRX inactivity timer (DRX IAT) rather than fixed in ms or slots. For example, the PDCCH monitoring skipping duration may be configured as a specific ratio of the DRX IAT. For example, the PDCCH monitoring skipping duration may be set to be 0.1, 0.25, 0.5, or 1 times the IAT. Meanwhile, a PDCCH monitoring skipping duration of 1 times the IAT may be interpreted as the same as PDCCH monitoring skipping, which indicates termination of a current DRX cycle. That is, when a PDCCH monitoring skipping duration equal to the length of the IAT is indicated, the UE may terminate the current DRX cycle.

According to [Method 2], the BS may induce the effect of power saving and increased power consumption efficiency of the UE by instructing the UE to sleep during one or more DRC cycles or delay the start times and/or end times of timers for a DRX active time by a PDCCH monitoring skipping indication.

### [Method 3] PDCCH monitoring skipping operation of UE according to expiration of DRX timer, and PDCCH monitoring method within PDCCH monitoring skipping duration

When the UE receives scheduling DCI including a PDCCH monitoring skipping indication during a retransmission procedure for scheduled data in progress, the UE may have to monitor a PDCCH to receive retransmission data even if the UE performs a PDCCH monitoring skipping operation. This is because when the UE is configured to monitor no PDCCHs within a PDCCH monitoring skipping duration, the UE should perform the retransmission procedure after the indicated PDCCH monitoring skipping duration ends, which may cause a transmission latency problem.

Further, when it is assumed that the PDCCH monitoring skipping operation is indicated to the UE and performed by the UE during a DRX active time, a UE operation needs to be defined clearly in the case where although a configured DRX-related timer expires and the DRX active time ends, the PDCCH monitoring skipping duration has not yet ended.

### [Method 3-1] The UE may be expected not to monitor a PDCCH which schedules data other than a retransmission, in a period during which the UE monitors a PDCCH which schedules a retransmission.

When PDCCH monitoring skipping is indicated to the UE, a retransmission procedure (e.g., HARQ process) may become a problem. PDCCH monitoring skipping that may be indicated to the UE may be applied immediately from the first symbol of the next slot after receiving DCI indicating the corresponding PDCCH monitoring skipping. In this case, when the UE fails to receive a PDSCH scheduled by scheduling DCI including a PDCCH monitoring skipping indication and thus should perform a retransmission procedure, the UE may complete the retransmission procedure after a PDCCH monitoring skipping duration indicated by the DCI.

However, since the PDCCH monitoring skipping duration may be set to up to 100ms, a situation may occur in which the UE may receive a PDSCH retransmitted due to failure to receive a scheduled PDSCH, up to 10ms after the first reception. Likewise, the retransmission procedure may not be processed in UL transmission rather than DL transmission. Because of this latency problem, it may not be preferred for the UE to perform the retransmission procedure after the PDCCH monitoring skipping duration.

Therefore, the UE may be configured to monitor DCI to perform an HARQ process even during a PDCCH monitoring skipping duration indicated to the UE. For example, a duration in which the UE is configured to monitor DCI even during a PDCCH monitoring skipping duration may be configured based on drx-RetransmissionTimerDL (or drx-RetransmissionTimerUL). The timer may refer to a maximum duration taken to complete a DL (or UL) retransmission during a DRX operation of the UE. In other words, the duration in which the UE monitors retransmission scheduling DCI may be easily configured using an already determined DRX configuration. Alternatively, the corresponding duration may be indicated by configuring a separate retransmission window.

Preferably, the UE may monitor only DCI for retransmission in a retransmission period configured for DCI monitoring even if the UE is performing a PDCCH monitoring skipping operation. Accordingly, the UE may expect to receive only scheduling DCI for retransmission during the retransmission period.

The scheduling DCI may include a 1-bit field of a new data indicator (NDI), and the NDI may be toggled to allow scheduled data to be identified as a new transmission or a retransmission. For example, the NDI corresponds to an HARQ process performed by the UE. Accordingly, when an NDI corresponding to each HARQ process is not toggled (that is, the value of the NDI is maintained), the UE may identify that data scheduled by DCI including the NDI is retransmission data.

When the UE may expect to receive only scheduling DCI for a retransmission during a retransmission period, the UE may be configured to consider scheduling DCI for a new transmission as an error case. In other words, when the NDI in the scheduling DCI is not toggled, the UE may receive scheduled data, whereas when the NDI is toggled, the UE may not receive subsequent scheduled data, considering the DCI as an error case.

Alternatively, DCI that the UE may expect to receive within a PDCCH monitoring skipping duration may be determined in consideration of not only an NDI but also an HARQ process number. For example, when the UE may expect only scheduling DCI for a retransmission during a retransmission period, the UE may identify an HARQ process number field in the DCI to determine whether the received DCI is for a retransmission or a new transmission. The HARQ process number corresponds to a transport block (TB) or code-block group (CBG). Therefore, the UE may determine whether the received DCI is retransmission DCI for a TB or CBG based on which drx-RetransmissionTimerDL (or drx-RetransmissionTimerUL) starts by identifying the HARQ process number field and the NDI together. Therefore, when the HARQ process number in the scheduling DCI is the same as before and the NDI is not toggled, the UE may receive data scheduled by the scheduling DCI, whereas when the HARQ process number is different from before or the NDI is toggled, the UE may not receive subsequent scheduled data, considering the DCI as an error case.

### [Method 3-2] A PDCCH monitoring skipping operation of a UE may be terminated a specific period of time after a DRX active time ends.

As described above, Rel-17 NR power saving is based on the assumption of a PDCCH monitoring adaptation operation within a DRX active time. Therefore, when the DRX active time operation of the UE ends (e.g., drx-onDurationTimer or drx-InactivityTimer expires), the PDCCH monitoring adaptation operation indicated to and performed by the UE may not be applied.

Preferably, PDCCH monitoring adaptation indicated for the current DRX cycle of the UE may not be applied to the next DRX cycle. The next DRX cycle may be considered to be after the next drx-onDurationTimer starts.

For example, when PDCCH monitoring skipping indicated for the current DRX cycle is configured to be long enough to be maintained even after the start of the next DRX cycle, the UE may have to perform the PDCCH monitoring skipping operation in which a PDCCH is not monitored, simultaneously with the start of the next drx-onDurationTimer. To prevent this UE operation, the PDCCH monitoring adaptation operation including PDCCH monitoring skipping may be configured to end when the DRX active time of the UE ends.

However, when the UE configured with [Method 3-1] is configured to end the PDCCH monitoring skipping operation at the same time as the expiration of drx-onDurationTimer or drx-InactivityTimer, a problem may occur when the UE performs the retransmission procedure.

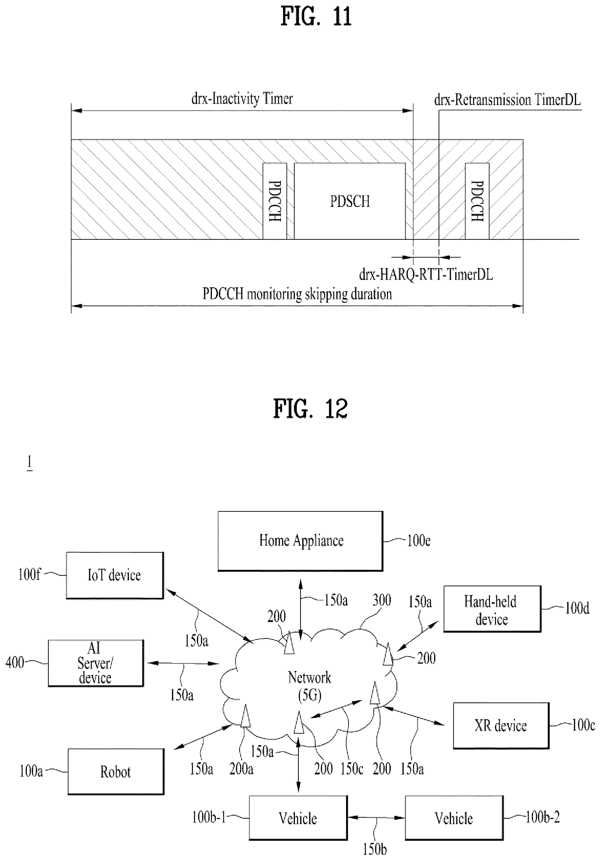

For example, referring to FIG. 11, since an indicated PDCCH monitoring skipping duration is longer than a remaining drx-InactivityTimer, the UE may receive DCI for retransmission within the PDCCH monitoring skipping duration. Because the DCI is not for a new transmission, drx-InactivityTimer may expire at a specified time without being restarted. When the UE fails to receive a retransmission PDSCH, the UE may restart the retransmission procedure and start drx-RetransmissionTimerDL after drx-HARQ-RTT-TimerDL to monitor a PDCCH for retransmission during the timer.

However, when the UE terminates the PDCCH monitoring skipping operation with the expiration of drx-InactivityTimer (i.e., when the PDCCH monitoring skipping duration has already ended), the originally scheduled PDCCH monitoring may not be performed in a period during which drx-RetransmissionTimerDL is counted after drx-HARQ-RTT-TimerDL.

Referring to FIG. 11, a downward-right hatched part of the PDCCH monitoring skipping duration means a period when drx-InactivityTimer expires and PDCCH monitoring skipping ends at the same time. In addition, an upward-right hatched part of the PDCCH monitoring skipping duration means a period in which although the PDCCH monitoring skipping operation is supposed to be performed, the PDCCH monitoring skipping ends at the same time as drx-InactivityTimer expires, and thus the PDCCH monitoring skipping operation is not actually performed. In other words, the hatched part indicates a period in which PDCCH monitoring skipping should be performed if PDCCH monitoring skipping does not end at the same time as drx-InactivityTimer expires. When a PDCCH received in a period during which drx-RetransmissionTimerDL is counted is for a new transmission, the UE should consider it as an error case. However, when the UE does not consider it as an error case, it may also be said that [Method 3-1] configured for the UE is not performed properly.

To perform [Method 3-1], the PDCCH monitoring skipping duration may end when drx-RetransmissionTimerDL is not counted a specific time after drx-InactivityTimer expires, rather than immediately after drx-InactivityTimer expires, so that the UE may properly perform the corresponding operation during the PDCCH monitoring skipping duration. In other words, in the case where the end time of the PDCCH monitoring skipping duration is after drx-InactivityTimer, when it is identified that drx-RetransmissionTimerDL is counted a specific time after the expiration of drx-InactivityTimer, the UE may perform PDCCH monitoring skipping during the remaining PDCCH monitoring skipping duration, considering that the retransmission procedure is in progress, and when drx-RetransmissionTimerDL is not counted the specific time after the expiration of drx-InactivityTimer, the UE may terminate the PDCCH monitoring skipping operation from a time when drx-RetransmissionTimerDL is identified as not counted.

For example, the specific time may be drx-HARQ-RTT-TimerDL + a, where a may be a value greater than 0ms. In this case, the UE may determine whether to end the PDCCH monitoring skipping operation or the PDCCH monitoring skipping duration depending on whether drx-RetransmissionTimerDL is counted a time of drx-HARQ-RTT-TimerDL + a after drx-InactivityTimer expires.

Further, when drx-RetransmissionTimerDL starts after drx-InactivityTimer expires, PDCCH monitoring skipping may be applied during the originally scheduled PDCCH monitoring skipping duration, so that the UE configured with [Method 3-1] may properly perform the PDCCH monitoring skipping operation during the PDCCH monitoring skipping duration. That is, PDCCH monitoring skipping may be applied to a period included in the period of drx-RetransmissionTimerDL excluding drx-HARQ-RTT-TimerDL in the hatched part of FIG. 11. In other words, PDCCH monitoring skipping may be configured to be performed in the period of drx-RetransmissionTimerDL during a short PDCCH monitoring skipping duration obtained by subtracting a duration in which PDCCH monitoring skipping has already been performed (e.g., a part over which drx-InacitivityTimer and the PDCCH monitoring skipping duration overlap) and drx-HARQ-RTT-TimerDL from the originally indicated PDCCH monitoring skipping duration.

Although [Method 3-2] has been described in the context of DL operations, it may be similarly applied to UL operations. FIG. 11 and [Method 3-2] may be applied to a UL operation by replacing PDSCH, drx-HARQ-RTT-TimerDL, and drx-RetransmissionTimerDL with PUSCH, drx-HARQ-RTT-TimerUL, and drx-RetransmissionTimerUL, respectively.

For example, like a DL operation, the UE may receive a PDCCH during an indicated PDCCH monitoring skipping duration, and transmit a PUSCH scheduled by the PDCCH. Then, the PDCCH monitoring skipping duration may end during drx-HARQ-RTT-TimerUL, and drx-RetransmissionTimerUL may start. In this case, similarly to the DL operation, the UE may end the PDCCH monitoring skipping duration or PDCCH monitoring skipping operation, when drx-RetransmisssionTimerUL is not counted even after a specific time. For example, in UL, the specific time may be drx-HARQ-RTT-TimerUL + a, where a may be a value greater than 0ms. In other words, the UE may determine whether to end the PDCCH monitoring skipping duration or the PDCCH monitoring skipping operation depending on whether drx-InactivityTimer expires after a time of drx-HARQ-RTT-TimerUL + a from the expiration of drx-RetransmissionTimerUL.

The various descriptions, functions, procedures, proposals, methods, and/or operation flowcharts of the disclosure described herein may be applied to, but not limited to, various fields requiring wireless communication/connectivity (e.g., 5G) between devices.

Below, which are more particularly illustrated with reference to the drawings. In the following drawings/descriptions, identical drawing symbols may illustrate the same or corresponding hardware blocks, software blocks, or functional blocks, unless otherwise indicated.

FIG. 12 illustrates a communication system 1 applied to the disclosure.

Referring to FIG. 12, the communication system 1 applied to the disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smartpad, a wearable device (e.g., a smartwatch or smartglasses), and a computer (e.g., a laptop). The home appliance may include a TV, a refrigerator, a washing machine, and so on. The IoT device may include a sensor, a smartmeter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g., V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g., relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the disclosure.

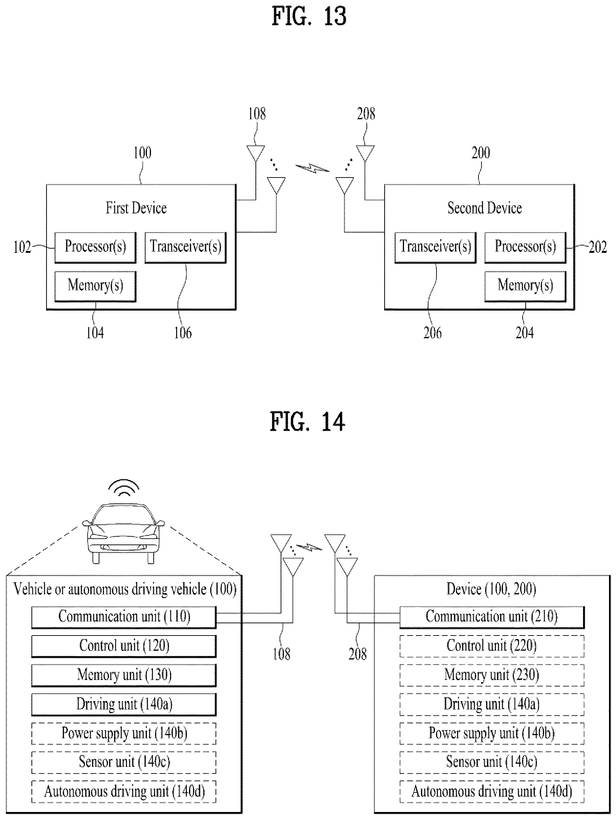

FIG. 13 illustrates wireless devices applicable to the disclosure.

Referring to FIG. 13, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 12.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the disclosure, the wireless device may be a communication modem/circuit/chip.

Specifically, commands and/or operations controlled by the processor and stored in the memory 104 in the first wireless device 100 according to an embodiment of the disclosure will be described below.

Although the following operations will be described based on a control operation of the processor(s) 102 in terms of the processor(s) 102, software code for performing such an operation may be stored in the memory 104. For example, in the disclosure, the at least one memory(s) 104 may store instructions or programs as a computer-readable storage medium. The instructions or the programs may cause, when executed, at least one processor operably connected to the at least one memory to perform operations according to embodiments or implementations of the disclosure, related to the following operations.

For example, the processor 102 may report capability information about the processor 102 to a BS through the transceiver 106 to support the operations proposed in the disclosure. The capability information may include capability information that indicates whether SSSG switching and/or PDCCH monitoring skipping is supported. Further, the capability information may include information about a PDCCH monitoring skipping duration preferred by the processor 102.

Reporting the capability information described above may be skipped in a certain circumstance (e.g., when the BS already has prior information or when each operation method is changed according to the needs of the BS).

To support the operations proposed in the disclosure, the processor 102 may receive, through the transceiver 106, first configuration information related to PDCCH monitoring skipping and/or a PDCCH monitoring skipping duration, and/or second configuration information related to a DCI format that may indicate PDCCH monitoring skipping and/or a PDCCH monitoring skipping duration. Alternatively, the first configuration information and the second configuration information may be received in a method (e.g., DCI or a MAC CE/header) of specifically indicating one of a plurality of configurations related to a plurality of PDCCH monitoring skipping durations and DCI formats that may indicate PDCCH monitoring skipping durations, which are (semi-)statically provided to the processor 102.

Based on the first configuration information related to PDCCH monitoring skipping and/or the PDCCH monitoring skipping duration and/or the second configuration information related to the DCI format that may indicate PDCCH monitoring skipping and/or the PDCCH monitoring skipping duration, the processor 102 may expect a time available for receiving DCI including a PDCCH monitoring skipping indication and a PDCCH monitoring skipping operation method based on this, receive DCI through the transceiver 106 at the position of the available reception time, and decode the DCI. Further, the processor 102 may perform a PDCCH monitoring skipping operation based on PDCCH monitoring skipping and/or a PDCCH monitoring skipping duration indicated via the received DCI, and receive a PDCCH through the transceiver 106 based on the PDCCH monitoring skipping operation.

A specific method of operating the processor 102 from receiving the first configuration information and the second configuration information to receiving the PDCCH based on PDCCH monitoring skipping may be based on at least one of [Method 1] to [Method 3].

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the disclosure, the wireless device may be a communication modem/circuit/chip.

Specifically, commands and/or operations controlled by the processor 202 and stored in the memory 124 in the second wireless device 200 according to an embodiment of the disclosure will be described below.

Although the following operations will be described based on a control operation of the processor(s) 202 in terms of the processor(s) 202, software code for performing such an operation may be stored in the memory(s) 204. For example, in the disclosure, the at least one memory(s) 204 may store instructions or programs as a computer-readable storage medium. The instructions or the programs may cause, when executed, at least one processor operably connected to the at least one memory to perform operations according to embodiments or implementations of the disclosure, related to the following operations.

For example, the processor 202 may receive capability information about a UE from the UE through the transceiver 206 to support the operations proposed in the disclosure. The capability information may include capability information that indicates whether SSSG switching and/or PDCCH monitoring skipping is supported. Further, the capability information may include information about a PDCCH monitoring skipping duration preferred by the UE.

Receiving the capability information described above may be skipped in a certain circumstance (e.g., when the processor 202 already has prior information or when each operation method is changed according to the needs of the processor 202).

To support the operations proposed in the disclosure, the processor 202 may transmit, through the transceiver 206, first configuration information related to PDCCH monitoring skipping and/or a PDCCH monitoring skipping duration, and/or second configuration information related to a DCI format that may indicate PDCCH monitoring skipping and/or a PDCCH monitoring skipping duration. Alternatively, the first configuration information and the second configuration information may be transmitted, through the transceiver 206, in a method (e.g., DCI or a MAC CE/header) of specifically indicating one of a plurality of configurations related to a plurality of PDCCH monitoring skipping durations and DCI formats that may indicate PDCCH monitoring skipping durations, which are (semi-)statically provided to the UE.

Based on the first configuration information related to PDCCH monitoring skipping and/or the PDCCH monitoring skipping duration and/or the second configuration information related to the DCI format that may indicate PDCCH monitoring skipping and/or the PDCCH monitoring skipping duration, the processor 202 may determine a time available for transmitting DCI including a PDCCH monitoring skipping indication and a PDCCH monitoring skipping operation method based on this, and transmit DCI through the transceiver 206 at the position of the available transmission time. Further, the processor 202 may transmit a PDCCH through the transceiver 206 based on PDCCH monitoring skipping and/or a PDCCH monitoring skipping duration indicated by the transmitted DCI.

A specific method of operating the processor 202 from transmitting the first configuration information and the second configuration information to transmitting the PDCCH based on PDCCH monitoring skipping may be based on at least one of [Method 1] to [Method 3].

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

FIG. 14 illustrates a vehicle or an autonomous driving vehicle applied to the disclosure. The vehicle or autonomous driving vehicle may be implemented as a mobile robot, a car, a train, a manned/unmanned aerial vehicle (AV), a ship, or the like.

Referring to FIG. 14 a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

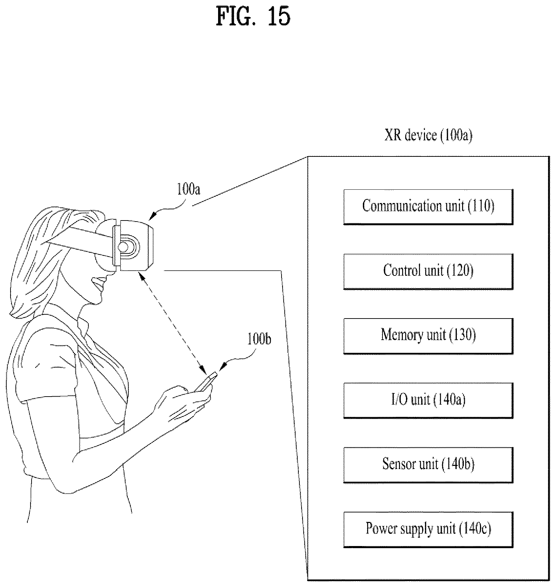

FIG. 15 illustrates an XR device applied to the disclosure. The XR device may be implemented by an HMD, an HUD mounted in a vehicle, a television, a smartphone, a computer, a wearable device, a home appliance, a digital signage, a vehicle, a robot, etc.

Referring to FIG. 15, an XR device 100a may include a communication unit 110, a control unit 120, a memory unit 130, an I/O unit 140a, a sensor unit 140b, and a power supply unit 140c.

The communication unit 110 may transmit and receive signals (e.g., media data and control signals) to and from external devices such as other wireless devices, hand-held devices, or media servers. The media data may include video, images, and sound. The control unit 120 may perform various operations by controlling constituent elements of the XR device 100a. For example, the control unit 120 may be configured to control and/or perform procedures such as video/image acquisition, (video/image) encoding, and metadata generation and processing. The memory unit 130 may store data/parameters/programs/code/commands needed to drive the XR device 100a/generate XR object. The I/O unit 140a may obtain control information and data from the exterior and output the generated XR object. The I/O unit 140a may include a camera, a microphone, a user input unit, a display unit, a speaker, and/or a haptic module. The sensor unit 140b may obtain an XR device state, surrounding environment information, user information, etc. The sensor unit 140b may include a proximity sensor, an illumination sensor, an acceleration sensor, a magnetic sensor, a gyro sensor, an inertial sensor, an RGB sensor, an IR sensor, a fingerprint recognition sensor, an ultrasonic sensor, a light sensor, a microphone and/or a radar. The power supply unit 140c may supply power to the XR device 100a and include a wired/wireless charging circuit, a battery, etc.

For example, the memory unit 130 of the XR device 100a may include information (e.g., data) needed to generate the XR object (e.g., an AR/VR/MR object). The I/O unit 140a may receive a command for manipulating the XR device 100a from a user and the control unit 120 may drive the XR device 100a according to a driving command of a user. For example, when a user desires to watch a film or news through the XR device 100a, the control unit 120 transmits content request information to another device (e.g., a hand-held device 100b) or a media server through the communication unit 130. The communication unit 130 may download/stream content such as films or news from another device (e.g., the hand-held device 100b) or the media server to the memory unit 130. The control unit 120 may control and/or perform procedures such as video/image acquisition, (video/image) encoding, and metadata generation/processing with respect to the content and generate/output the XR object based on information about a surrounding space or a real object obtained through the I/O unit 140a/sensor unit 140b.

The XR device 100a may be wirelessly connected to the hand-held device 100b through the communication unit 110 and the operation of the XR device 100a may be controlled by the hand-held device 100b. For example, the hand-held device 100b may operate as a controller of the XR device 100a. To this end, the XR device 100a may obtain information about a 3D position of the hand-held device 100b and generate and output an XR object corresponding to the hand-held device 100b.

The embodiments of the disclosure described herein below are combinations of elements and features of the disclosure. The elements or features may be considered selective unless otherwise mentioned. Each element or feature may be practiced without being combined with other elements or features. Further, an embodiment of the disclosure may be constructed by combining parts of the elements and/or features. Operation orders described in embodiments of the disclosure may be rearranged. Some constructions of any one embodiment may be included in another embodiment and may be replaced with corresponding constructions of another embodiment. It will be obvious to those skilled in the art that claims that are not explicitly cited in each other in the appended claims may be presented in combination as an embodiment of the disclosure or included as a new claim by a subsequent amendment after the application is filed.

In the disclosure, a specific operation described as performed by the BS may be performed by an upper node of the BS in some cases. Namely, it is apparent that, in a network comprised of a plurality of network nodes including a BS, various operations performed for communication with an MS may be performed by the BS, or network nodes other than the BS. The term `BS' may be replaced with the term 'fixed station,' `Node B,' `enhanced Node B (eNode B or eNB),' `access point,' etc.

Those skilled in the art will appreciate that the disclosure may be carried out in other specific ways than those set forth herein without departing from the spirit and essential characteristics of the disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### Industrial Applicability

While the above-described method of transmitting and receiving a signal in an unlicensed band and an apparatus therefor have been described based on an example applied to a 5G NR system, the method and apparatus are applicable to various wireless communication systems in addition to the 5G NR system.

## Claims

1. A method of receiving a physical downlink control channel (PDCCH) by a user equipment (UE) in a wireless communication system, the method comprising:
receiving first information related to search space set group (SSSG) switching and second information related to PDCCH monitoring skipping through a higher layer;
receiving downlink control information (DCI) indicating a PDCCH monitoring skipping operation through a search space set;
determining a duration of the PDCCH monitoring skipping operation based on the DCI and an SSSG corresponding to the search space set; and
receiving the PDCCH after an end of the duration.

2. The method of claim 1, wherein the DCI further indicates an SSSG to monitor after an end of the duration.

3. The method of claim 1, wherein the duration is aligned with a timer for the SSSG switching.

4. The method of claim 1, wherein the first information and the second information are configured for each bandwidth part (BWP).

5. The method of claim 1, wherein when a first end time of the duration is after a second end time of a discontinuous reception (DRX) active time, a DRX cycle corresponding to the DRX active time ends before the second end time.

6. The method of claim 1, wherein a PDCCH monitoring adaptation operation corresponding to a bit value of a PDCCH monitoring adaptation field included in the DCI is determined based on a format of the DCI.

7. A user equipment (UE) for receiving a physical downlink control channel (PDCCH) in a wireless communication system, the UE comprising:
at least one transceiver;
at least one processor; and
at least one memory operably connected to the at least one processor and storing instructions which when executed, cause the at least one processor to perform operations,
wherein the operations include:
receiving, through the at least one transceiver, first information related to search space set group (SSSG) switching and second information related to PDCCH monitoring skipping through a higher layer;
receiving, through the at least one transceiver, downlink control information (DCI) indicating a PDCCH monitoring skipping operation through a search space set;
determining a duration of the PDCCH monitoring skipping operation based on the DCI and an SSSG corresponding to the search space set; and
receiving the PDCCH through the at least one transceiver, after an end of the duration.

8. The UE of claim 7, wherein the DCI further indicates an SSSG to monitor after an end of the duration.

9. The UE of claim 7, wherein the duration is aligned with a timer for the SSSG switching.

10. The UE of claim 7, wherein the first information and the second information are configured for each bandwidth part (BWP).

11. The UE of claim 7, wherein when a first end time of the duration is after a second end time of a discontinuous reception (DRX) active time, a DRX cycle corresponding to the DRX active time ends before the second end time.

12. The UE of claim 7, wherein a PDCCH monitoring adaptation operation corresponding to a bit value of a PDCCH monitoring adaptation field included in the DCI is determined based on a format of the DCI.

13. An apparatus for receiving a physical downlink control channel (PDCCH) in a wireless communication system, the apparatus comprising:
at least one processor; and
at least one memory operably connected to the at least one processor and storing instructions which when executed, cause the at least one processor to perform operations,
wherein the operations include:
receiving first information related to search space set group (SSSG) switching and second information related to PDCCH monitoring skipping through a higher layer;
receiving downlink control information (DCI) indicating a PDCCH monitoring skipping operation through a search space set;
determining a duration of the PDCCH monitoring skipping operation based on the DCI and an SSSG corresponding to the search space set; and
receiving the PDCCH after an end of the duration.

14. A computer-readable storage medium including at least one computer program causing at least one processor to perform operations,
wherein the operations include:
receiving first information related to search space set group (SSSG) switching and second information related to PDCCH monitoring skipping through a higher layer;
receiving downlink control information (DCI) indicating a PDCCH monitoring skipping operation through a search space set;
determining a duration of the PDCCH monitoring skipping operation based on the DCI and an SSSG corresponding to the search space set; and
receiving the PDCCH after an end of the duration.

15. A method of transmitting a physical downlink control channel (PDCCH) by a base station (BS) in a wireless communication system, the method comprising:
transmitting first information related to search space set group (SSSG) switching and second information related to PDCCH monitoring skipping through a higher layer;
transmitting downlink control information (DCI) indicating a PDCCH monitoring skipping operation through a search space set; and
transmitting the PDCCH after a duration of the PDCCH monitoring skipping operation determined based on the DCI and an SSSG corresponding to the search space set ends.

16. A base station (BS) for transmitting a physical downlink control channel (PDCCH) in a wireless communication system, the BS comprising:
at least one transceiver;
at least one processor; and
at least one memory operably connected to the at least one processor and storing instructions which when executed, cause the at least one processor to perform operations,
wherein the operations include:
transmitting first information related to search space set group (SSSG) switching and second information related to PDCCH monitoring skipping through a higher layer;
transmitting downlink control information (DCI) indicating a PDCCH monitoring skipping operation through a search space set; and
transmitting the PDCCH after a duration of the PDCCH monitoring skipping operation determined based on the DCI and an SSSG corresponding to the search space set ends.
